# EUROPEAN PATENT APPLICATION

(11) **EP 3 103 848 A1**
(43) Date of publication of application: **14.12.2016**
(21) Application number: 15202866.8
(22) Date of filing: 29.12.2015
(51) Int. Cl.: C09J 7/02, C09J 11/04

(54) **ADHESIVE FILM**

(30) Priority: 13.06.2015 JP 2015119839; 16.06.2015 JP 2015120704; 19.11.2015 WO PCT/JP2015/082528
(71) Applicant: Mitsubishi Plastics, Inc., Tokyo 100-8252 (JP)
(72) Inventor: KAWASAKI, Taishi, Maibara-shi, Shiga (JP)
(74) Representative: Ter Meer Steinmeister & Partner

(57) **Abstract**

The present invention provides an adhesive film hardly suffering from fisheyes and having excellent mechanical strength and heat resistance as well as good adhesive properties which can be suitably used as various surface protective films, etc. The present invention relates to an adhesive film comprising a non-polyolefin-based film and an adhesive layer formed on at least one surface of the non-polyolefin-based film, the adhesive layer having a thickness of 1 to 3000 nm and an adhesion strength to a polymethyl methacrylate plate of 1 to 1000 mN/cm.

## Description

### TECHNICAL FIELD

The present invention relates to an adhesive film, and more particularly, to an adhesive film hardly suffering from fisheyes and having excellent mechanical strength and heat resistance as well as good adhesive properties which can be suitably used as a surface protective film, for example, for preventing formation of scratches or deposition of contaminants upon transportation, storage or processing of resin plates, metal plates, etc.

### BACKGROUND ART

Hitherto, surface protective films have been extensively used in the applications of preventing formation of scratches or deposition of contaminants upon transportation, storage or processing of resin plates, metal plates, glass plates, etc., preventing formation of scratches or deposition of dirt and dusts or contaminants upon processing of members used in electronics-related fields such as liquid crystal display panels and polarizing plates, preventing deposition of contaminants upon transportation or storage of automobiles or protecting automobile painting against acid rain, protecting flexible printed boards upon plating or etching treatments thereof, and the like.

It has been required that these surface protective films can exhibit an adequate adhesion strength to various kinds of adherends such as resin plates, metal plates and glass plates upon transportation, storage or processing thereof, can be attached onto these adherends to protect the surface thereof, and can be easily peeled off from the adherends after accomplishing the objects as aimed. To overcome these tasks, there has been proposed the use of polyolefin-based films for the purpose of protecting the surface of the adherends (Patent Literatures 1 and 2).

However, since the polyolefin-based films are used as a base material of the surface protective films, it is not possible to avoid occurrence of defects generally called fisheyes, i.e., formation of gels or deteriorated products derived from raw materials of the base material of the film. For example, there tends to arise such a problem that when testing the adherend onto which the surface protective film is attached, these defects on the surface protective film are detected as defects of the adherend, etc., thereby causing disturbance of the test.

In addition, the base material for the surface protective films is required to have a certain degree of mechanical strength to such an extent that the base material is free of expansion owing to a tensile force applied upon various processes such as lamination onto the adherend, etc. However, the polyolefin-based films are generally deteriorated in mechanical strength, so that there tends to occur such a problem that the films are unsuitable for high-tension processing to be conducted owing to increase in velocity of processing of the film in view of the importance to productivity thereof.

Further, in the case where the processing temperature of the polyolefin-based films is increased for enhancing processing velocity or improving various properties thereof, the polyolefin-based films tend to have poor heat-shrink stability and therefore tend to be deteriorated in dimensional stability. For this reason, there is an increasing demand for films having not only less heat deformation but also excellent dimensional stability even when subjected to high-temperature processing.

### CITATION LIST

### Patent Literature

Patent Literature 1: Japanese Patent Application Laid-Open (KOKAI) No. 5-98219
Patent Literature 2: Japanese Patent Application Laid-Open (KOKAI) No. 2007-270005

### SUMMARY OF INVENTION

### TECHNICAL PROBLEM

The present invention has been accomplished to solve the above conventional problems. An object of the present invention is to provide an adhesive film hardly suffering from fisheyes and having excellent mechanical strength and heat resistance as well as good adhesive properties which can be suitably used as various surface protective films, etc.

### SOLUTION TO PROBLEM

As a result of the present inventors' earnest study in view of the above conventional problems, it has been found that these problems can be readily solved by using an adhesive film having a specific structure. The present invention has been attained on the basis of this finding.

That is, in an aspect of the present invention, there is provided an adhesive film comprising a non-polyolefin-based film and an adhesive layer formed on at least one surface of the non-polyolefin-based film, the adhesive layer having a thickness of 1 to 3000 nm and an adhesion strength to a polymethyl methacrylate plate of 1 to 1000 mN/cm.

### ADVANTAGEOUS EFFECTS OF INVENTION

In accordance with the present invention, there can be provided an adhesive film hardly suffering from fisheyes and having excellent mechanical strength and heat resistance as well as good adhesive properties which can be suitably used as various surface protective films, etc. Therefore, the present invention has a high industrial value.

### DESCRIPTION OF EMBODIMENTS

In order to achieve the above objects, i.e., reduction of occurrence of fisheyes in the film and improvement in mechanical strength and heat resistance of the film, it is considered to be necessary that a fundamental material of the base film is largely changed to the other materials. As a result of various studies based on the above consideration, it has been found that the above objects can be achieved by using a non-polyolefin-based material that is largely different from the conventionally used polyolefin-based materials. Examples of the non-polyolefin-based material include a polyester film, a polycarbonate film, a fluororesin film, a polyimide film, a triacetyl cellulose film, a polyacrylate film, a polystyrene film, a polyvinyl chloride film, a polyvinyl alcohol film, a nylon film, etc. In particular, the non-polyolefin-based material is preferably excellent in heat resistance and mechanical properties in order to develop the material in various applications. For this reason, as the non-polyolefin-based material, there are preferably used a polyester film, a polycarbonate film, a fluororesin film and a polyimide film. Further, in view of good transparency, moldability and flexibility, a polyester film is more preferably used.

However, when the material of the base film is largely changed to the non-polyolefin-based material as described above, the resulting film tends to be considerably deteriorated in adhesion properties. Thus, the aforementioned generally used non-polyolefin-based materials have failed to provide satisfactory results. In consequence, it has been contemplated to improve properties of the film by providing an adhesive layer on the base film. As a result, the present invention has been accomplished.

The present invention is described in detail below.

The film constituting the adhesive film of the present invention may have either a single layer structure or a multilayer structure. Unless departing from the scope of the present invention, the film may have not only a two or three layer structure but also a four or more layer structure, and the layer structure of the adhesive film is not particularly limited. The film preferably has a two or more layer structure to form the respective characteristic layers and thereby provide a multi-functionalized film.

### (Polyester film)

The polyester may be in the form of either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned at least one compound selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned at least one compound selected from the group consisting of ethylene glycol, diethylene glycol, propylene glycol, butanediol, 4-cyclohexanedimethanol and neopentyl glycol.

From the standpoint of producing a film capable of withstanding various processing conditions, the polyester film is preferably enhanced in mechanical strength and heat resistance (dimensional stability upon heating). Therefore, the polyester film preferably comprises a less amount of a copolyester component. More specifically, the content of monomers forming the copolyester in the polyester film is usually in the range of not more than 10 mol%, preferably not more than 5 mol%, and more preferably not more than about 3 mol% as a content of a diether component that is produced as a by-product upon polymerization of a homopolyester. The configuration of the polyester film is preferably a film formed of polyethylene terephthalate prepared by polymerizing terephthalic acid and ethylene glycol among the aforementioned compounds, or polyethylene naphthalate, in view of good mechanical strength and heat resistance thereof, and more preferably a film formed of polyethylene terephthalate in view of facilitated production of the film and good handling properties when used in the applications such as a surface protective film.

The polymerization catalyst for production of the polyester is not particularly limited, and any conventionally known compounds may be used as the polymerization catalyst. Examples of the polymerization catalyst include an antimony compound, a titanium compound, a germanium compound, a manganese compound, an aluminum compound, a magnesium compound and a calcium compound. Of these compounds, the antimony compound is preferred in view of inexpensiveness. In addition, the titanium compound or the germanium compound is also preferably used because they exhibit a high catalytic activity, and are capable of conducting the polymerization even when used in a small amount, and enhancing transparency of the obtained film owing to a less amount of the metals remaining in the film. Further, the use of the titanium compound is more preferred because the germanium compound is expensive.

When using the titanium compound upon production of the polyester, the content of the titanium element in the polyester is usually in the range of not more than 50 ppm, preferably 1 to 20 ppm, and more preferably 2 to 10 ppm. When the content of the titanium element in the polyester is excessively large, the polyester tends to suffer from accelerated deterioration in the step of melt-extruding the polyester so that the resulting film tends to exhibit a strong yellowish color. On the other hand, when the content of the titanium element in the polyester is excessively small, the polymerization efficiency tends to be deteriorated, so that the cost tends to be increased, and the resulting film tends to hardly exhibit a sufficient strength. In addition, when using the titanium compound upon production of the polyester, for the purpose of suppressing deterioration thereof in the melt-extrusion step, a phosphorus compound is preferably used to reduce an activity of the titanium compound. As the phosphorus compound, orthophosphoric acid is preferably used in view of productivity and thermal stability of the obtained polyester. The content of the phosphorus element in the polyester is usually in the range of 1 to 300 ppm, preferably 3 to 200 ppm, and more preferably 5 to 100 ppm based on the amount of the polyester melt-extruded. When the content of the phosphorus compound in the polyester is excessively large, gelation of the polyester or inclusion of foreign matters therein tends to be caused. On the other hand, when the content of the phosphorus compound in the polyester is excessively small, it is not possible to sufficiently reduce an activity of the titanium compound, so that the resulting film tends to exhibit a strong yellowish color.

### (Polycarbonate film)

As the polycarbonate, there may be used conventionally known polycarbonates. Of these polycarbonates, preferred are those polycarbonates of the type having a bisphenol A structure.

### (Fluororesin film)

As the fluororesin, there may be used conventionally known fluororesins. Example of the fluororesin include polytetrafluoroethylene, a tetrafluoroethylene-hexafluororpropylene copolymer, a tetrafluoroethylene-perfluoroalkyl vinyl ether copolymer, etc.

For the purpose of imparting easy-slipping properties to the resulting film, preventing occurrence of flaws on the film in the respective steps and improving anti-blocking properties of the film, the film may also comprise particles. When the particles are compounded in the film, the kinds of particles compounded in the film are not particularly limited as long as they are capable of imparting easy-slipping properties to the resulting film. Specific examples of the particles include inorganic particles such as particles of silica, calcium carbonate, magnesium carbonate, barium carbonate, calcium sulfate, calcium phosphate, magnesium phosphate, kaolin, aluminum oxide, zirconium oxide and titanium oxide; and organic particles such as particles of acrylic resins, styrene resins, urea resins, phenol resins, epoxy resins and benzoguanamine resins. Further, there may also be used deposited particles obtained by precipitating and finely dispersing a part of metal compounds such as a catalyst during the process for production of the resin as the base material of the film. Of these particles, from the standpoint of exhibiting good effects even when used in a small amount, silica particles and calcium carbonate particles are preferably used.

The average particle diameter of the particles incorporated into the film is usually in the range of not more than 10 *µ*m, preferably 0.01 to 5 *µ*m, and more preferably 0.01 to 3 *µ*m. When the average particle diameter of the particles is more than 10 *µ*m, there tends occur such a fear that the particles are fallen off from the resulting film, or the obtained film tends to be deteriorated in transparency.

Further, the content of the particles in the film may vary depending upon the average particle diameter of the particles, and is therefore not particularly limited. The content of the particles in the film is usually in the range of less than 5% by weight, preferably 0.0003 to 3% by weight, and more preferably 0.0005 to 1% by weight. When the content of the particles in the film is more than 5% by weight, there tends to occur such a fear that the film suffers from defects owing to falling off of the particles and deterioration in transparency of the film. When no particles or merely a less amount of the particles are used in the film, although the obtained film exhibits a high transparency and therefore becomes a good film, there tend to occur problems such as insufficient slipping properties of the resulting film, so that it is necessary to take measures for enhancing the slipping properties by incorporating an appropriate amount of particles into the adhesive layer.

The shape of the particles used in the film is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The method of adding the particles to the film is not particularly limited, and any conventionally known methods can be suitably used therefor. For example, the particles may be incorporated into the film at any optional stages in the process for producing the resin forming the film and also constituting the respective layers of the film. The particles may also be incorporated into the film after production of the resin.

The film according to the present invention may also comprise, in addition to the above particles, conventionally known additives such as an ultraviolet absorber, an antioxidant, an antistatic agent, a thermal stabilizer, a lubricant, a dye, a pigment, etc., if required.

The thickness of the film used in the present invention is not particularly limited, and the film may have any thickness as long as the film having a suitable film shape can be formed. The thickness of the film is usually in the range of 2 to 350 *µ*m, preferably 5 to 200 *µ*m and more preferably 10 to 75 *µ*m.

Next, a specific example of a production process of the film is described below. However, the present invention is not particularly limited to the exemplified production process. In general, the film may be produced by melting a resin to obtain a sheet of the resin, and then subjecting the resulting sheet to drawing for the purpose of enhancing strength thereof, etc. As one example, the process for producing the aforementioned polyester film is illustrated. _For example, in the case of producing a biaxially oriented polyester film, first, a raw polyester material is extruded from a die using an extruder in the form of a molten sheet, and the molten sheet is cooled and solidified on a chilled roll to obtain an undrawn sheet. In this case, in order to enhance flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn sheet is further drawn in the direction perpendicular to the drawing direction of the first stage. In this case, the drawing temperature is usually 70 to 170°C, and the draw ratio is usually 2.5 to 7 times and preferably 3.0 to 6 times. Subsequently, the resulting biaxially drawn film is heat-set at a temperature of 180 to 270°C under tension or under relaxation within 30% to obtain a biaxially oriented film. Upon the above drawing steps, there may also be used the method in which the drawing in each direction is carried out in two or more stages. In such a case, the multi-stage drawing is preferably performed such that the total draw ratio in each of the two directions finally falls within the above-specified range. Also, the drawing may also be conducted by a simultaneous biaxial drawing method.

Next, the method of forming the adhesive layer constituting the adhesive film of the present invention is described. As the method of forming the adhesive layer, there may be mentioned, for example, a coating method, a transfer method, a lamination method, etc. In view of facilitated formation of the adhesive layer and well-controlled thickness thereof in the range of 1 to 3000 nm, Of these methods, preferred is the coating method.

As the coating method, there may be used an in-line coating method in which the coating is carried out during the step of forming the film, or an off-line coating method in which the film produced is once transferred to an outside of the film production system and subjected to the coating treatment. Of these coating methods, preferred is the in-line coating method.

More specifically, in the in-line coating method, the coating step is carried out in an optional stage from melt-extrusion of a resin for forming the film up to taking-up of the resulting film via subjecting the extruded material of the resin to drawing and then heat-setting. In the in-line coating method, any of the undrawn sheet obtained by the melting and rapid cooling, the monoaxially drawn film, the biaxially drawn film before the heat-setting, and the film before the taking-up but after the heat-setting, is usually subjected to the coating step. For example, in the case of a sequential biaxial drawing process, there may be used such an excellent method in which after subjecting the monoaxially drawn film that is drawn in a length direction (longitudinal direction) to the coating step, the thus coated monoaxially drawn film is drawn in a lateral direction thereof, though the present invention is not particularly limited thereto. The above method is advantageous from the standpoint of production cost, because the film is formed simultaneously with formation of the adhesive layer thereon. Also, since the drawing is conducted after the coating step, the thickness of the adhesive layer may be changed by adjusting a draw ratio of the film, so that a thin-film coating step in which the thickness of the thin film lies within the range of 1 to 3000 nm can be more easily conducted as compared to the off-line coating method.

In addition, by providing the adhesive layer on the film before the drawing step, it is possible to subject the adhesive layer together with the base film to the drawing step, so that the adhesive layer can be strongly adhered to the base film. Further, upon production of the biaxially oriented film, since the film is drawn while grasping end portions of the film by clips, etc., it is possible to constrain the film in both of the longitudinal and lateral directions. As a result, in the heat-setting step, it is possible to expose the film to high temperature without formation of wrinkles, etc., while maintaining flatness of the film.

For this reason, the heat-setting treatment after the coating step can be conducted at a high temperature that is not achievable by the other methods, so that it is possible to enhance film-forming properties of the adhesive layer, strongly adhere the adhesive layer to the base film, and further strengthen the resulting adhesive layer.

According to the step conducted by the aforementioned in-line coating method, no large change in dimension of the film is caused depending on whether or not the adhesive layer is formed thereon, and no large risk of formation of flaws or deposition of foreign matters on the film is also caused depending on whether or not the adhesive layer is formed thereon. Therefore, the in-line coating method is considerably advantageous as compared to the off-line coating method that needs the coating step as an additional step. Furthermore, as a result of various studies, it has been found that the in-line coating method is also advantageous because it is capable of more effectively reducing an amount of adhesive residue as a component of the adhesive layer transferred onto an adherend when allowing the adhesive film of the present invention to adhere to the adherend. It is considered that this is because the in-line coating method is capable of conducting the heat-setting treatment at a much higher temperature that is not achievable in the off-line coating method, so that the adhesive layer and the base film can be more strongly adhered to each other.

In the present invention, it is essentially required that the adhesive layer has a thickness of 1 to 3000 nm, and an adhesion strength to a polymethyl methacrylate plate, of 1 to 1000 mN/cm.

Although a general adhesive layer has a thickness as large as several tens of *µ*m, the thickness of the adhesive layer used in the present invention is controlled to the range as thin as 1 to 3000 nm. For this reason, for example, in the case where the adhesive film of the present invention is used for production of a polarizing plate, the adhesive film is adhered onto an adherend such as the polarizing plate and then cut. Upon the cutting, etc., it is possible to minimize an amount of an adhesive squeezed out from the adhesive layer. Further, owing to the fact that an absolute amount of the adhesive layer present on the adhesive film is small, it is possible to effectively reduce an amount of adhesive residue as a component of the adhesive layer transferred onto the adherend. With respect to the adhesion strength of the adhesive layer, by controlling an adhesion strength of the adhesive layer to a polymethyl methacrylate in the range of 1 to 1000 mN/cm, it is possible to obtain a film capable of satisfy both of an adhesion performance and a peeling performance for peeling the film after being bonded, and therefore provide an optimum film that can be used in various steps in which adhesion/peel operations are conducted.

With respect to the materials forming the adhesive layer, as a result of various studies, it has been found that by using the resin having a glass transition point of not higher than 0°C, it is likely to impart adequate adhesion properties exhibited in the aforementioned thickness and adhesion strength ranges to the non-polyolefin-based film. As the resin having a glass transition point of not higher than 0°C, there may be used conventionally known resins. Specific examples of the resin include polyester resins, acrylic resins, urethane resins, polyvinyl resins (such as polyvinyl alcohol and vinyl chloride-vinyl acetate copolymers), etc. Of these resins, in particular, in view of good adhesion properties and coatability, preferred are polyester resins, acrylic resins and urethane resins. Further, in view of good reusability of the resulting film, more preferred are polyester resins and acrylic resins. In addition, in the case where a polyester film is used as the base material, in view of good adhesiveness to the base material and a less amount of adhesive residue on an adherend, most preferred are polyester resins, whereas in view of a less change in properties with time, most preferred are acrylic resins.

The polyester resins may be those polyester resins produced, for example, from the following polycarboxylic acids and polyhydroxy compounds as main constituents thereof. More specifically, as the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfoisophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, a trimellitic acid monopotassium salt and ester-forming derivatives thereof. Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, an adduct of bisphenol A with ethylene glycol, diethylene glycol, triethylene glycol, polyethylene glycol, polypropylene glycol, polytetramethylene glycol, polytetramethyleneoxide glycol, dimethylol propionic acid, glycerin, trimethylol propane, sodium dimethylol ethyl sulfonate and potassium dimethylol propionate. The polyester resins may be synthesized by appropriately selecting one or more compounds from the aforementioned respective kinds of compounds and subjecting these compounds to polycondensation reaction by an ordinary method.

Among the aforementioned polyester resins, in order to reduce a glass transition point thereof to not higher than 0°C, the polyester resins comprising an aliphatic polycarboxylic acid or an aliphatic polyhydroxy compound as a constituent thereof are preferably used. In general, the polyester resin is constituted of an aromatic polycarboxylic acid and a polyhydroxy compound including an aliphatic polyhydroxy compound. Therefore, in order to reduce a glass transition point of the polyester resin to the level lower than that of generally used polyester resins, it is effective to incorporate an aliphatic polycarboxylic acid into the polyester resin as a constituent thereof. From the standpoint of reducing a glass transition point of the polyester resin, among the aliphatic polycarboxylic acids, those aliphatic polycarboxylic acids having a large number of carbon atoms are suitably used, and the number of carbon atoms in the aliphatic polycarboxylic acids is usually in the range of not less than 6 (adipic acid), preferably not less than 8, and more preferably not less than 10. The upper limit of the preferred range of the number of carbon atoms in the aliphatic polycarboxylic acids is 20.

Also, from the standpoint of improving adhesion properties of the resulting film, the content of the aliphatic polycarboxylic acid in an acid component of the polyester resin is usually not less than 2 mol%, preferably not less than 4 mol%, more preferably not less than 6 mol%, and even more preferably not less than 10 mol%, and the upper limit of the preferred range of the content of the aliphatic polycarboxylic acid in an acid component of the polyester resin is 50 mol%.

In order to reduce a glass transition point of the polyester resin, the number of carbon atoms in the aliphatic polyhydroxy compound is preferably not less than 4 (butanediol). The content of the aliphatic polyhydroxy compound in a hydroxy component of the polyester resin is usually in the range of not less than 10 mol%, and preferably not less than 30 mol%.

In view of good adaptability to an in-line coating method, it is preferred that the polyester resin is rendered aqueous. For this reason, the polyester resin preferably comprises sulfonic acid, a sulfonic acid metal salt, a carboxylic acid or a carboxylic acid metal salt. In particular, among these compounds, from the standpoint of good dispersibility in water, preferred are sulfonic acid and a sulfonic acid metal salt, and more preferred is a sulfonic acid metal salt.

In the case where the sulfonic acid, sulfonic acid metal salt, carboxylic acid or carboxylic acid metal salt is used in the polyester resin, the content of the sulfonic acid, sulfonic acid metal salt, carboxylic acid or carboxylic acid metal salt in an acid component of the polyester resin is usually in the range of 0.1 to 10 mol%, and preferably 0.2 to 8 mol%. When using the sulfonic acid, sulfonic acid metal salt, carboxylic acid or carboxylic acid metal salt in the above-specified range, the obtained polyester resin can exhibit good dispersibility in water.

Also, in view of good appearance of the adhesive layer when formed by an in-line coating method, good adhesion properties and anti-blocking properties against the base film, and reduction in amount of adhesive residue on an adherend when used as a surface protective film, the polyester resin preferably comprises a certain amount of an aromatic polycarboxylic acid as an acid component thereof. Among the aromatic polycarboxylic acids, from the standpoint of good adhesion properties of the resulting film, aromatic polycarboxylic acids having a benzene ring structure such as terephthalic acid and isophthalic acid are more preferably used than those having a naphthalene ring structure. In addition, in order to further improve adhesion properties of the resulting film, it is more preferred that two or more kinds of aromatic polycarboxylic acids are used in combination with each other.

In order to improve adhesion properties of the resulting film, the glass transition point of the polyester resin is usually in the range of not higher than 0°C, preferably not higher than -10°C, and more preferably not higher than -20°C. The lower limit of the preferred range of the glass transition point of the polyester resin is -60°C. When controlling the glass transition point of the polyester resin used herein to the above-specified range, it is possible to readily produce a film having optimum adhesion properties.

The acrylic resin used in the present invention is in the form of a polymer obtained from a polymerizable monomer including an acrylic monomer and a methacrylic monomer ("acrylic" and "methacrylic" are hereinafter also totally referred to merely as "(meth)acrylic"). The polymer may be either a homopolymer or a copolymer, or may also be a copolymer with a polymerizable monomer other than the acrylic or methacrylic monomer.

The polymer may also include a copolymer of any of the aforementioned polymers with the other polymer (such as, for example, a polyester and a polyurethane). Examples of such a copolymer include a block copolymer and a graft copolymer. In addition, the polymer may also include a polymer obtained by polymerizing the polymerizable monomer in a polyester solution or a polyester dispersion (which may also be in the form of a mixture of the polymers). Further, the polymer may also include a polymer obtained by polymerizing the polymerizable monomer in a polyurethane solution or a polyurethane dispersion (which may also be in the form of a mixture of the polymers). Similarly, the polymer may also include a polymer obtained by polymerizing the polymerizable monomer in the other polymer solution or the other polymer dispersion (which may also be in the form of a mixture of the polymers).

The above polymerizable monomer is not particularly limited. Examples of the typical compounds of the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate, 2-ethylhexyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, a-methyl styrene, divinyl benzene and vinyl toluene; various vinyl esters such as vinyl propionate and vinyl acetate; various silicon-containing polymerizable monomers such as g-methacryloxypropyl trimethoxysilane and vinyl trimethoxysilane; various phosphorus-containing vinyl-based monomers; various vinyl halide-based monomers such as vinyl chloride and vinylidene chloride; and various conjugated dienes such as butadiene.

In order to reduce a glass transition point of the resin to not higher than 0°C, it is necessary to use a (meth)acrylic compound whose homopolymer has a glass transition point of not higher than 0°C. Examples of the (meth)acrylic compound whose homopolymer has a glass transition point of not higher than 0°C include ethyl acrylate (glass transition point: -22°C), n-propyl acrylate (glass transition point: -37°C), isopropyl acrylate (glass transition point: -5°C), n-butyl acrylate (glass transition point: -55°C), n-hexyl acrylate (glass transition point: - 57°C), 2-ethylhexyl acrylate (glass transition point: -70°C), isononyl acrylate (glass transition point: -82°C), lauryl acrylate (glass transition point: -65°C), 2-hydroxyethyl acrylate (glass transition point: -15°C), etc.

From the standpoint of attaining good adhesion properties of the resulting film, the content of the monomer whose homopolymer has a glass transition point of not higher than 0°C, as a monomer constituting the acrylic resin, is usually in the range of not less than 30% by weight, preferably not less than 45% by weight, more preferably not less than 60% by weight, and even more preferably not less than 70% by weight based on a whole amount of the acrylic resin. On the other hand, the upper limit of the preferred range of the content of the monomer is 99% by weight. By controlling the content of the monomer in the acrylic resin to the above-specified range, the resulting film can exhibit good adhesion properties.

Also, in order to improve adhesion properties of the resulting film, the glass transition point of the monomer whose homopolymer has a glass transition point of not higher than 0°C is usually not higher than -20°C, preferably not higher than -30°C, more preferably not higher than -40°C, and even more preferably not higher than -50°C. The lower limit of the preferred range of the glass transition point of the monomer whose homopolymer has a glass transition point of not higher than 0°C is -100°C. By controlling a glass transition point of the monomer whose homopolymer has a glass transition point of not higher than 0°C to the above-specified range, it is possible to readily produce a film having adequate adhesion properties.

As the monomer used for improving adhesion properties of the resulting film, there are usually used alkyl (meth)acrylates comprising an alkyl group usually having 4 to 30 carbon atoms, preferably 4 to 20 carbon atoms and more preferably 4 to 12 carbon atoms. From the standpoints of industrial mass-productivity as well as good handling properties and good supply stability, acrylic resins comprising n-butyl acrylate and 2-ethylhexyl acrylate as a constituent thereof are optimum.

The more optimum configuration of the acrylic resin for improving adhesion properties of the resulting film is as follows. That is, the total content of n-butyl acrylate and 2-ethylhexyl acrylate in the acrylic resin is usually not less than 30% by weight, preferably not less than 40% by weight, and more preferably not less than 50% by weight. The upper limit of the preferred range of the total content of n-butyl acrylate and 2-ethylhexyl acrylate in the acrylic resin is 99% by weight.

In order to improve adhesion properties of the resulting film, the glass transition point of the acrylic resin is usually in the range of not higher than 0°C, preferably not higher than -10°C, more preferably not higher than -20°C, and even more preferably not higher than -30°C. The lower limit of the preferred range of the glass transition point of the acrylic resin is -80°C. By controlling the glass transition point of the acrylic resin to the above-specified range, it is possible to readily produce a film having optimum adhesion properties.

The urethane resin used in the present invention is a high-molecular compound having a urethane bond in a molecule thereof. The urethane resin is usually produced by the reaction between a polyol and an isocyanate. Examples of the polyol include polycarbonate polyols, polyether polyols, polyester polyols, polyolefin polyols and acrylic polyols. These compounds may be used alone or in combination of any two or more thereof.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

From the standpoint of improving adhesion properties of the resulting film, among the above polycarbonate polyols, preferred are the polycarbonate polyols constituted of a diol component comprising a chain-like alkyl group usually having 4 to 30 carbon atoms, preferably 4 to 20 carbon atoms, and more preferably 6 to 12 carbon atoms. From the standpoints of high industrial mass-productivity as well as good handling properties and good supply stability, copolymerized polycarbonate polyols comprising 1,6-hexanediol or at least two diols selected from the group consisting of 1,4-butanediol, 1,5-pentanediol and 1,6-hexanediol are optimum.

Examples of the polyether polyols include polyethylene glycol, polypropylene glycol, polyethylene/propylene glycol, polytetramethylene ether glycol and polyhexamethylene ether glycol.

From the standpoint of improving adhesion properties of the resulting film, among the above polyether polyols, preferred are those polyether polyols comprising an aliphatic diol, in particular, a straight-chain aliphatic diol, which usually has 2 to 30 carbon atoms, preferably 3 to 20 carbon atoms and more preferably 4 to 12 carbon atoms, as a monomer forming the polyether.

Examples of the polyester polyols include those compounds produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol), as well as those compounds comprising a derivative unit of a lactone compound such as polycaprolactone.

Among the above polyols, in view of good adhesion properties of the resulting film, the polycarbonate polyols and the polyester polyols are more suitably used, and the polycarbonate polyols are even more suitably used.

Examples of a polyisocyanate compound used for producing the urethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as a,a,a',a'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

When the urethane resin is synthesized, there may be used a chain extender. The chain extender used upon the synthesis is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidene cyclohexyl-4,4'-diamine, 1,4-diaminocyclohexane and 1,3-bisaminomethyl cyclohexane.

The urethane resin may be dispersed or dissolved in a solvent as a medium, and is preferably dispersed or dissolved in water as the medium. In order to disperse or dissolve the urethane resin in water, there may be used those urethane resins of a forcibly emulsifiable type which can be dispersed and dissolved using an emulsifier, or those urethane resins of a self-emulsifiable type or a watersoluble type which are obtained by introducing a hydrophilic group into urethane resins, etc. Among these urethane resins, in particular, self-emulsifiable type urethane resins which are ionomerized by introducing an ionic group into a structure of urethane resins are preferred because they are excellent in storage stability of the coating solution as well as water resistance and transparency of the resulting adhesive layer.

Examples of the ionic group to be introduced into the urethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer of the urethane resin, or the method in which a carboxyl group-containing component is used as one component of the polyol, the polyisocyanate, the chain extender and the like. In particular, there is preferably used the method in which a carboxyl group-containing diol is used to introduce a desired amount of a carboxyl group into the urethane resin by suitably adjusting an amount of the diol component charged.

For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc. In addition, the carboxyl group thus introduced is preferably formed into a salt thereof by neutralizing the carboxyl group with ammonia, amines, alkali metals, inorganic alkalis, etc. Among these compounds used for the neutralization, especially preferred are ammonia, trimethylamine and triethylamine. When using such a urethane resin, the carboxyl group thereof from which the neutralizing agent is removed in the drying step after the coating step may be used as a crosslinking reaction site which can be reacted with other crosslinking agents. As a result, the coating solution using the above-described urethane resin is excellent in stability even when preserved in the form of a solution before subjected to coating treatment, and further the adhesive layer obtained therefrom can be further improved in durability, solvent resistance, water resistance, anti-blocking properties, etc.

In order to improve adhesion properties of the resulting film, the glass transition point of the urethane resin is usually in the range of not higher than 0°C, preferably not higher than -10°C, more preferably not higher than -20°C, and even more preferably not higher than -30°C. The lower limit of the preferred range of the glass transition point of the urethane resin is -80°C. By controlling the glass transition point of the urethane resin to the above-specified range, it is possible to readily produce a film having optimum adhesion properties.

In addition, for the purpose of controlling the strength and adhesion properties of the resulting adhesive layer, a crosslinking agent may be used in combination with the aforementioned components.

As the crosslinking agent, there may be used conventionally known crosslinking agents. Examples of the crosslinking agent include an epoxy compound, a melamine compound, an oxazoline compound, an isocyanate compound, a carbodiimide compound, a silane coupling compound, a hydrazide compound, an aziridine compound, etc. Among these crosslinking agents, from the standpoints of attaining good strength of the adhesive layer and controlling adhesion properties thereof, preferred are an epoxy compound, a melamine compound, an oxazoline compound, an isocyanate compound, a carbodiimide compound and a silane coupling compound, and more preferred is an epoxy compound.

In the case of using a crosslinking agent other than the epoxy compound, if the content of the crosslinking agent in the adhesive layer is excessively large, the resulting film tends to be deteriorated in adhesion properties. Therefore, in the case of using a crosslinking agent other than the epoxy compound, it is required to take care of a content thereof in the adhesive layer.

The epoxy compound is a compound having an epoxy group in a molecule thereof. Examples of the epoxy compound include condensation products of epichlorohydrin with a hydroxyl group of ethylene glycol, polyethylene glycol, glycerol, polyglycerol, bisphenol A, etc., or an amino group. Specific examples of the epoxy compound include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

From the standpoint of good adhesion properties of the resulting adhesive layer, among the above epoxy compounds, preferred are polyether-based epoxy compounds. As to the number of epoxy groups in the epoxy compounds, tri- or higher-functional polyfunctional polyepoxy compounds are more preferably used than bifunctional epoxy compounds.

The melamine compound is a compound having a melamine skeleton therein. Examples of the melamine compound include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In view of good reactivity with various compounds, the melamine compound preferably comprises a hydroxyl group. In addition, there may also be used those compounds obtained by subjecting a urea or the like to co-condensation with a part of melamine. Further, a catalyst may also be used to enhance reactivity of the resulting melamine compound.

The oxazoline compound is a compound having an oxazoline group in a molecule thereof. In particular, the oxazoline compound is preferably in the form of a polymer having an oxazoline group which may be either a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of good industrial availability thereof. The other monomers used in the copolymer are not particularly limited as long as they are monomers that are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl, cyclohexyl or the like); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamides and N,N-dialkyl (meth)acrylamides (in which the alkyl group may be methyl, ethyl, n-propyl, isopropyl, n-butyl, isobutyl, t-butyl, 2-ethylhexyl, cyclohexyl or the like); vinyl esters such as vinyl acetate and vinyl propionate; vinyl ethers such as methyl vinyl ether and ethyl vinyl ether; a-olefins such as ethylene and propylene; halogen-containing a,b-unsaturated monomers such as vinyl chloride, vinylidene chloride and vinyl fluoride; and a,b-unsaturated aromatic monomers such as styrene and a-methyl styrene. These other monomers may be used alone or in combination of any two or more thereof.

The content of an oxazoline group in the oxazoline compound is usually in the range of 0.5 to 10 mmol/g, preferably 1 to 9 mmol/g, more preferably 3 to 8 mmol/g, and even more preferably 4 to 6 mmol/g. When controlling the content of an oxazoline group in the oxazoline compound to the above-specified range, the resulting coating film can be improved in durability, and therefore it is possible to readily control adhesion properties of the resulting film.

The isocyanate-based compound is a compound having an isocyanate derivative structure such as typically an isocyanate and a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as a,a,a',a'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. Further examples of the isocyanate include polymers and derivatives of these isocyanates such as biuret compounds, isocyanurate compounds, uretdione compounds and carbodiimide-modified compounds thereof. These isocyanates may be used alone or in combination of any two or more thereof. Of these isocyanates, in view of avoiding yellowing due to irradiation with ultraviolet rays, aliphatic isocyanates and alicyclic isocyanates are more suitably used as compared to aromatic isocyanates.

When the isocyanate-based compound is used in the form of a blocked isocyanate, examples of blocking agents used for production thereof include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as dimethyl malonate, diethyl malonate, methyl isobutanoyl acetate, methyl acetoacetate, ethyl acetoacetate and acetyl acetone; mercaptan-based compounds such as butyl mercaptan and dodecyl mercaptan; lactam-based compounds such as e-caprolactam and d-valerolactam; amine-based compounds such as diphenyl aniline, aniline and ethylene imine; acid amide-based compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof.

In addition, the isocyanate-based compounds may be used in the form of a single substance or in the form of a mixture with various polymers or a bonded product therewith. The isocyanate-based compounds are preferably used in the form of a mixture or a bonded product with polyester resins or urethane resins from the standpoint of improving dispersibility or crosslinkability of the isocyanate-based compounds.

The carbodiimide-based compound is a compound having a carbodiimide structure. The carbodiimide-based compound may be used for enhancing wet heat resistance of the adhesive layer. The carbodiimide-based compound is in the form of a compound having one or more carbodiimide structures or carbodiimide derivative structures in a molecule thereof, and the preferred carbodiimide-based compound is a polycarbodiimide-based compound having two or more carbodiimide structures or carbodiimide derivative structures in a molecule thereof in view of attaining good adhesion properties or the like of the resulting adhesive layer.

The carbodiimide-based compound may be synthesized by conventionally known techniques. In general, the carbodiimide-based compound may be obtained by a condensation reaction of a diisocyanate compound. The diisocyanate compound used in the reaction is not particularly limited, and may be either an aromatic diisocyanate or an aliphatic diisocyanate. Specific examples of the diisocyanate compound include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Further, in order to improve water solubility or water dispersibility of the polycarbodiimide-based compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the effects of the present invention.

Meanwhile, these crosslinking agents are used for improving performance of the adhesive layer by allowing the crosslinking agents to react with the compounds contained in the adhesive layer during a drying step or a film-forming step thereof. Therefore, it is estimated that the resulting adhesive layer comprises the unreacted crosslinking agent, compounds obtained after the reaction, or a mixture thereof.

Also, for the purpose of improving anti-blocking properties and slipping properties of the resulting film as well as controlling adhesion properties thereof, particles may be used in combination with the aforementioned components for forming the adhesive layer. However, the inclusion of the particles in the adhesive layer tends to sometimes cause deterioration in adhesion strength of the resulting adhesive layer depending upon kinds of the particles used, and therefore care must be taken in such a case. In particular, in the case where it is intended to exhibit an adhesion performance of the resin in the adhesive layer as such, it may be desirable in some cases to incorporate no particles into the adhesive layer.

However, as a result of various studies, it has been found that when controlling an average particle diameter of the particles to be incorporated into the adhesive layer and a ratio of the average particle diameter to the thickness of the adhesive layer to adequate ranges, it is possible to readily ensure not only good adhesive strength but also good anti-blocking properties and slipping properties which have been found to be properties contradictory to the adhesion strength. When the average particle diameter of the particles incorporated into the adhesive layer is more than 3 *µ*m or more than 3 times the thickness of the adhesive layer, there tends to occur such a problem that the resulting adhesive layer fails to exhibit a sufficient adhesive strength to which most importance is attached, and suffers from desorption of the particles therefrom, and the resulting film has a poor visibility owing to increased haze thereof.

In the case where the particles are incorporated into the adhesive layer, the average particle diameter of the particles incorporated into the adhesive layer is usually in the range of not more than 3 *µ*m, preferably 1 nm to 2 *µ*m, more preferably 5 nm to 1 *µ*m, even more preferably 10 to 500 nm, and most preferably 15 to 300 nm. When the thickness of the adhesive layer is thin, for example, lies in the range of not more than 1 *µ*m, as the average particle diameter of the particles incorporated in the adhesive layer is reduced, the adhesive layer can be more effectively prevented from suffering from deterioration in adhesive strength thereof, and can be effectively enhanced in adhesion properties. However, the effect of improving handling properties of the film owing to good anti-blocking properties and slipping properties thereof tends to be deteriorated. For this reason, in some cases, the particles are preferably used under such a condition that the average particle diameter thereof lies in the aforementioned preferred range, depending upon the applications of the resulting film.

When incorporating the particles into the adhesive layer, the ratio of the average particle diameter of the particles to the thickness of the adhesive layer (value obtained by dividing the average particle diameter of the particles by the thickness of the adhesive layer) is usually in the range of not more than 3 times, preferably 0.001 to 2 times, more preferably 0.01 to 1 time, even more preferably 0.04 to 0.8 time, and further even more preferably 0.1 to 0.7 time. When the ratio of the average particle diameter of the particles to the thickness of the adhesive layer is excessively large, the adhesive layer tends to be deteriorated in adhesion strength depending upon design of the adhesive layer. In particular, when the ratio lies within the range of more than 1 time, the adhesive layer tends to suffer from remarkable deterioration in adhesion strength depending upon properties of the adhesive layer or a counter part base material (adherend) to which the adhesive film is adhered, and therefore careful attention should be paid in such a case. On the other hand, when the ratio of the average particle diameter of the particles to the thickness of the adhesive layer is excessively small, the effect of improving handling properties of the adhesive film owing to anti-blocking properties and slipping properties thereof tends to be deteriorated. For this reason, it is required to use the adhesive film such that the ratio of the average particle diameter of the particles to the thickness of the adhesive layer falls within the aforementioned preferred range, depending upon the applications of the film.

As the material of the particles incorporated in the adhesive layer, there may be used those materials for various conventionally known particles. Examples of the material of the particles incorporated in the adhesive layer include inorganic particles such as particles of silica, calcium carbonate, magnesium carbonate, barium carbonate, calcium sulfate, calcium phosphate, magnesium phosphate, kaolin, aluminum oxide, zirconium oxide and titanium oxide; and organic particles such as particles of acrylic resins, styrene resins, urea resins, phenol resins, epoxy resins and benzoguanamine resins. Of these particles, from the standpoints of exhibiting high heat resistance, hardly suffering from deformation and easily controlling adhesion properties and anti-blocking properties, inorganic particles are preferred, and in view of selectivity of an average particle diameter thereof and good convenience, silica particles are more preferred.

These particles to be incorporated into the adhesive layer may be used alone or in combination of any two or more kinds thereof. For example, when using combination of two kinds of particles which are different in average particle diameter from each other, the resulting film can be further improved in slipping properties without deterioration in transparency thereof.

On the surface of the adhesive film opposed to the surface on which the adhesive layer is provided, there may be formed any functional layer for imparting various functions to the film. For example, in order to reduce occurrence of blocking of the film owing to the adhesive layer, a release layer is preferably provided on the opposite surface of the film. Also, in the preferred embodiment of the present invention, in order to prevent defects owing to deposition of surrounding contaminants, etc., which are caused by peeling electrification or frictional electrification of the film, an antistatic layer may be provided on the opposite surface of the film. The functional layer may be provided by a coating method, and may be formed by either an in-line coating method or an off-line coating method. From the standpoints of low production cost as well as stabilization of releasing performance and antistatic performance by in-line heat treatment, among these methods, the in-line coating method is preferably used.

For example, in the case where the release functional layer is provided on the surface of the adhesive film opposed to the surface on which the adhesive layer is provided, a release agent used in the release functional layer is not particularly limited, and there may be used any conventionally known release agents. Examples of the release agent include a long-chain alkyl group-containing compound, a fluorine compound, a silicone compound, a wax, etc. Among these release agents, from the standpoints of less contamination and excellent performance for reducing occurrence of blocking, the long-chain alkyl group-containing compound and the fluorine compound are preferably used. In particular, in the case of attaching importance to reduction in occurrence of blocking, the silicone compound is preferably used. In addition, in order to improve decontamination properties on the surface of the film, the wax is effectively used. These release agents may be used alone or in combination of any two or more thereof.

The long-chain alkyl group-containing compound means a compound comprising a linear or branched alkyl group usually having not less than 6 carbon atoms, preferably not less than 8 carbon atoms, and more preferably not less than 12 carbon atoms. Examples of the alkyl group of the long-chain alkyl group-containing compound include a hexyl group, an octyl group, a decyl group, a lauryl group, an octadecyl group, a behenyl group, etc. Examples of the long-chain alkyl group-containing compound include various compounds such as a long-chain alkyl group-containing polymer compound, a long-chain alkyl group-containing amine compound, a long-chain alkyl group-containing ether compound, a long-chain alkyl group-containing quaternary ammonium salt, etc. In view of good heat resistance and decontamination properties, the polymer compound is preferred. Also, from the standpoint of effectively attaining good releasing properties, the polymer compound comprising a long-chain alkyl group on a side chain thereof is more preferred.

The polymer compound comprising a long-chain alkyl group on a side chain thereof may be produced by reacting a polymer compound comprising a reactive group with a compound comprising an alkyl group capable of reacting with the reactive group. Examples of the reactive group include a hydroxyl group, an amino group, a carboxyl group, an acid anhydride, etc.

Examples of the compound comprising the reactive group include polyvinyl alcohol, polyethylene imine, polyethylene amine, reactive group-containing polyester resins, reactive group-containing poly(meth)acrylic resins, etc. Of these compounds, in view of good releasing properties and easiness of handling, preferred is polyvinyl alcohol.

Examples of the compound comprising an alkyl group capable of reacting with the reactive group include long-chain alkyl group-containing isocyanates such as hexyl isocyanate, octyl isocyanate, decyl isocyanate, lauryl isocyanate, octadecyl isocyanate and behenyl isocyanate; long-chain alkyl group-containing organic chlorides such as hexyl chloride, octyl chloride, decyl chloride, lauryl chloride, octadecyl chloride and behenyl chloride; long-chain alkyl group-containing amines; long-chain alkyl group-containing alcohols; and the like. Of these compounds, in view of good releasing properties and easiness of handling, preferred are long-chain alkyl group-containing isocyanates, and more preferred is octadecyl isocyanate.

In addition, the polymer compound comprising a long-chain alkyl group on a side chain thereof may also be produced by polymerizing a long-chain alkyl (meth)acrylate or copolymerizing the long-chain alkyl (meth)acrylate with the other vinyl group-containing monomer. Examples of the long-chain alkyl (meth)acrylate include hexyl (meth)acrylate, octyl (meth)acrylate, decyl (meth)acrylate, lauryl (meth)acrylate, octadecyl (meth)acrylate, behenyl (meth)acrylate, etc.

The above fluorine compound is a compound comprising a fluorine atom therein. From the standpoint of a good coating appearance of the layer formed by the in-line coating method, among these fluorine compounds, organic fluorine compounds are preferably used. Examples of the organic fluorine compounds include perfluoroalkyl group-containing compounds, polymers of fluorine atom-containing olefin compounds, and aromatic fluorine compounds such as fluorobenzene. In view of good releasing properties of the resulting film, preferred are the perfluoroalkyl group-containing compounds. Further, as the fluorine compound, there may also be used the below-mentioned compounds including a long-chain alkyl compound.

Examples of the perfluoroalkyl group-containing compounds include perfluoroalkyl group-containing (meth)acrylates such as perfluoroalkyl (meth)acrylates, perfluoroalkyl methyl (meth)acrylates, 2-perfluoroalkyl ethyl (meth)acrylates, 3-perfluoroalkyl propyl (meth)acrylates, 3-perfluoroalkyl-1-methyl propyl (meth)acrylates and 3-perfluoroalkyl-2-propenyl (meth)acrylates, or polymers thereof; perfluoroalkyl group-containing vinyl ethers such as perfluoroalkyl methyl vinyl ethers, 2-perfluoroalkyl ethyl vinyl ethers, 3-perfluoropropyl vinyl ether, 3-perfluoroalkyl-1-methyl propyl vinyl ethers and 3-perfluoroalkyl-2-propenyl vinyl ethers, or polymers thereof; and the like. Of these perfluoroalkyl group-containing compounds, in view of good heat resistance and decontamination properties of the resulting film, preferred are the polymers. The polymers may be produced from either a single compound solely or a plurality of compounds. In addition, in view of good releasing properties of the resulting film, the perfluoroalkyl groups preferably have 3 to 11 carbon atoms. Further, the perfluoroalkyl group-containing compounds may also be in the form of a polymer with the below-mentioned compound comprising the long-chain alkyl compound. Furthermore, from the standpoint of good adhesion properties to the base material of the film, the polymer with vinyl chloride is also preferred.

The above silicone compound is a compound having a silicone structure in a molecule thereof. Examples of the silicone compound include alkyl silicones such as dimethyl silicone and diethyl silicone, phenyl group-containing silicones such as phenyl silicone and methyl phenyl silicone, etc. As the silicone compound, there may also be used those silicone compounds comprising various functional groups. Examples of the functional groups include an ether group, a hydroxyl group, an amino group, an epoxy group, a carboxyl group, a halogen group such as a fluorine group, a perfluoroalkyl group, a hydrocarbon group such as various alkyl groups and various aromatic groups, and the like. Also, as silicones comprising the other functional groups, there are generally known silicones comprising a vinyl group and hydrogen silicones comprising a silicon atom to which a hydrogen atom is directly bonded. Further, addition-type silicones obtained by using both of the aforementioned silicones in combination with each other (silicones of such a type as produced by addition reaction between the vinyl group and hydrogen silane) may also be used.

Furthermore, as the silicone compound, there may also be used modified silicones such as an acrylic-grafted silicone, a silicone-grafted acrylic compound, an amino-modified silicone and a perfluoroalkyl-modified silicone. In view of good heat resistance and decontamination properties of the resulting film, among these silicone compounds, preferred are curable-type silicone resins. As the curable-type silicone resins, there may be used any kinds of curing reaction-type silicones such as condensation type silicones, addition type silicones, active energy ray-curable type silicones, etc. Among the aforementioned silicone compounds, from the standpoint of less transfer of the compounds onto a rear side surface of the film when taken up into a roll, preferred is the condensation type silicone compound.

The preferred form of the silicone compound used in the present invention is a polyether group-containing silicone compound from the standpoints of less transfer of the compounds onto a rear side surface of the film, good dispersibility in an aqueous solvent and high adaptability to in-line coating. The polyether group of the polyether group-containing silicone compound may be bonded to a side chain or terminal end of the silicone compound, or may be bonded to a main chain of the silicone. From the standpoint of good dispersibility in an aqueous solvent, the polyether group is preferably bonded to a side chain or terminal end of the silicone compound.

The polyether group of the polyether group-containing silicone compound may have a conventionally known structure. From the standpoint of good dispersibility in an aqueous solvent, as the polyether group, an aliphatic polyether group is more suitable than an aromatic polyether group. Among the aliphatic polyether groups, more preferred are alkyl polyether groups. Also, from the standpoint of less problems upon synthesis owing to steric hindrance, straight-chain alkyl polyether groups are more suitable than branched alkyl polyether groups. Among the straight-chain alkyl polyether groups, preferred are polyether groups comprising a straight-chain alkyl group having not more than 8 carbon atoms. In addition, when water is used as a developing solvent, in view of good dispersibility in water, a polyethylene glycol group or a polypropylene glycol group is preferred, and a polyethylene glycol group is particularly optimum.

The number of ether bonds in the polyether group is usually in the range of 1 to 30, preferably 2 to 20, and more preferably 3 to 15, from the standpoints of good dispersibility in an aqueous solvent and good durability of the resulting functional layer. When the number of ether bonds in the polyether group is excessively small, the polyether group-containing silicone compound tends to be deteriorated in dispersibility. On the other hand, when the number of ether bonds in the polyether group is excessively large, the polyether group-containing silicone compound tends to cause deterioration in durability or releasing properties of the resulting film.

In the case where the polyether group of the polyether group-containing silicone compound is located at a side chain or a terminal end of the silicone, the terminal end of the polyether group is not particularly limited, and may include various functional groups such as a hydroxyl group, an amino group, a thiol group, a hydrocarbon group such as an alkyl group and a phenyl group, a carboxyl group, a sulfonic group, an aldehyde group, an acetal group, etc. Of these functional groups, in view of good dispersibility in water and good crosslinking properties for enhancing strength of the resulting functional layer, preferred are a hydroxyl group, an amino group, carboxyl group and a sulfonic group, and more preferred is a hydroxyl group.

The content of the polyether group in the polyether group-containing silicone compound in terms of a molar ratio thereof as calculated assuming that a molar amount of a siloxane bond in the silicone is 1, is usually in the range of 0.001 to 0.30%, preferably 0.01 to 0.20%, more preferably 0.03 to 0.15%, and even more preferably 0.05 to 0.12%. When adjusting the content of the polyether group to the above-specified range, it is possible to maintain good dispersibility of the compound in water as well as good durability and releasing properties of the resulting functional layer.

The molecular weight of the polyether group-containing silicone compound is preferably not so large in view of good dispersibility in an aqueous solvent, whereas the molecular weight of the polyether group-containing silicone compound is preferably large in view of good durability or releasing performance of the resulting functional layer. It has been demanded to achieve good balance between both of the aforementioned properties, i.e., between the dispersibility in an aqueous medium and the durability or releasing performance of the functional layer. The number-average molecular weight of the polyether group-containing silicone compound is usually in the range of 1000 to 100000, preferably 3000 to 30000, and more preferably 5000 to 10000.

In addition, in view of less deterioration in properties of the functional layer with time and good releasing performance thereof as well as decontamination properties in various respective steps, the amount of low-molecular weight components (those having a number-average molecular weight of not more than 500) in the silicone compound is preferably as small as possible. The content of the low-molecular weight components in the silicone compound is usually in the range of not more than 15% by weight, preferably not more than 10% by weight, and more preferably not more than 5% by weight based on a whole amount of the silicone compound. When using the condensation type silicone, if the vinyl group bonded to silicon (vinyl silane) and the hydrogen group bonded to silicon (hydrogen silane) remain unreacted as such in the functional layer, the resulting functional layer tends to suffer from deterioration in various properties with time. Therefore, the content of the functional groups in the silicone compound is usually not more than 0.1 mol%, and it is preferred that the silicone compound comprises none of the functional groups.

Since it is difficult to apply the polyether group-containing silicone compound solely, the polyether group-containing silicone compound is preferably used in the form of a dispersion thereof in water. In order to disperse the polyether group-containing silicone compound in water, there may be used various conventionally known dispersants. Examples of the dispersants include an anionic dispersant, a nonionic dispersant, a cationic dispersant and an amphoteric dispersant. Of these dispersants, in view of good dispersibility of the polyether group-containing silicone compound and good compatibility thereof with a polymer other than the polyether group-containing silicone compound which is used for forming the functional layer, preferred are an anionic dispersant and a nonionic dispersant. As the dispersant, there may also be used a fluorine compound.

Examples of the anionic dispersant include sulfonic acid salts and sulfuric acid ester salts such as sodium dodecylbenzenesulfonate, sodium alkylsulfonates, sodium alkylnaphthalenesulfonates, sodium dialkylsulfosuccinates, sodium polyoxyethylene alkylethersulfates, sodium polyoxyethylene alkylallylethersulfates and polyoxyalkylene alkenylethersulfuric acid ammonium salts; carboxylic acid salts such as sodium laurate and potassium oleate; and phosphoric acid salts such as alkyl phosphoric acid salts, polyoxyethylene alkyl ether phosphoric acid salts and polyoxyethylene alkyl phenyl ether phosphoric acid salts. Of these anionic dispersants, from the standpoint of good dispersibility, preferred are sulfonic acid salts.

Examples of the nonionic dispersant include ether-type nonionic dispersants obtained by adding an alkyleneoxide such as ethyleneoxide and propyleneoxide to a hydroxyl group-containing compound such as a higher alcohol and an alkyl phenol, ester-type nonionic dispersants obtained by an ester bond between a polyhydric alcohol such as glycerol and sugars, and a fatty acid, ester-ether-type nonionic dispersants obtained by adding an alkyleneoxide to a fatty acid or a polyhydric alcohol fatty acid ester, amide-type nonionic dispersants obtained by an amide bond between a hydrophobic group and a hydrophilic group, etc. Of these nonionic dispersants, in view of good solubility in water and good stabilization, preferred are ether-type nonionic dispersants, and in view of good handling properties, more preferred are nonionic dispersants of the type obtained by the addition of ethyleneoxide.

The amount of the dispersant used may vary depending upon the molecular weight and structure of the polyether group-containing silicone compound used as well as the kind of dispersant used, and therefore is not particularly limited. However, the amount of the dispersant is controlled, as a measure, such that the weight ratio thereof to the polyether group-containing silicone compound as calculated assuming that the amount of the polyether group-containing silicone compound is 1, is usually in the range of 0.01 to 0.5, preferably 0.05 to 0.4, and more preferably 0.1 to 0.3.

The above wax includes those waxes selected from natural waxes, synthetic waxes and mixtures of these waxes. Examples of the natural waxes include vegetable waxes, animal waxes, mineral waxes and petroleum waxes. Specific examples of the vegetable waxes include candelilla waxes, carnauba waxes, rice waxes, haze waxes and jojoba oils. Specific examples of the animal waxes include beeswaxes, lanolin and spermaceti waxes. Specific examples of the mineral waxes include montan waxes, ozokerite and ceresin. Specific examples of the petroleum waxes include paraffin waxes, microcrystalline waxes and petrolatum. Specific examples of the synthetic waxes include synthetic hydrocarbons, modified waxes, hydrogenated waxes, fatty acids, acid amides, amines, imides, esters and ketones. As the synthetic hydrocarbons, there may be mentioned Fischer-Tropsch waxes (alias: Sasol Wax), polyethylene waxes or the like. In addition, those polymers having a low molecular weight (specifically, those polymers having a number-average molecular weight of 500 to 20000) are also included in the synthetic hydrocarbons. Specific examples of the synthetic hydrocarbons include polypropylene, ethylene-acrylic acid copolymers, polyethylene glycol, polypropylene glycol, and blocked or grafted combined products of polyethylene glycol and polypropylene glycol. Specific examples of the modified waxes include montan wax derivatives, paraffin wax derivatives and microcrystalline wax derivatives. The derivatives as used herein mean compounds obtained by subjecting the respective waxes to any treatment selected from refining, oxidation, esterification and saponification, or combination of these treatments. Specific examples of the hydrogenated waxes include hardened castor oils and hardened castor oil derivatives.

Of these waxes, in view of well stabilized properties thereof, preferred are the synthetic waxes, more preferred are polyethylene waxes, and even more preferred are polyethylene oxide waxes. The number-average molecular weight of the synthetic waxes is usually in the range of 500 to 30000, preferably 1000 to 15000, and more preferably 2000 to 8000, from the standpoints of good stabilization of properties such as anti-blocking properties and good handling properties.

In the case where the antistatic functional layer is provided on the surface of the adhesive film opposed to the surface on which the adhesive layer is provided, the antistatic agent incorporated in the antistatic functional layer is not particularly limited, and there may be used conventionally known antistatic agents. Among them, in view of good heat resistance and wet heat resistance of the resulting film, preferred are polymer-type antistatic agents. Examples of the polymer-type antistatic agents include an ammonium group-containing compound, a polyether compound, a sulfonic group-containing compound, a betaine compound and a conductive polymer.

The ammonium group-containing compound means a compound comprising an ammonium group in a molecule thereof. Examples of the ammonium group-containing compound include various ammonium compounds such as an aliphatic amine, an alicyclic amine and an aromatic amine. Of these ammonium group-containing compounds, preferred are polymer-type ammonium group-containing compounds, and the ammonium group is preferably incorporated not as a counter ion but into a main chain or side chain of the polymer. For example, as the ammonium group-containing compound, there may be mentioned and suitably used those ammonium group-containing high-molecular weight compounds as polymers obtained by polymerizing a monomer comprising an addition-polymerizable ammonium group or a precursor of the ammonium group such as an amine. The polymers may be in the form of a homopolymer produced by polymerizing the monomer comprising an addition-polymerizable ammonium group or a precursor of the ammonium group such as an amine solely or a copolymer produced by copolymerizing the above monomer with the other monomer.

As the ammonium group-containing compound, pyrrolidinium ring-containing compounds are also preferably used from the standpoints of excellent antistatic properties and heat resistance/stability of the resulting film.

The two substituent groups bonded to a nitrogen atom of the pyrrolidinium ring-containing compounds are each independently an alkyl group or a phenyl group, etc. The alkyl group or phenyl group may be substituted with the following substituent group. Examples of the substituent group that can be bonded to the alkyl group or phenyl group include a hydroxyl group, an amide group, an ester group, an alkoxy group, a phenoxy group, a naphthoxy group, a thioalkoxy group, a thiophenoxy group, a cycloalkyl group, a trialkyl ammonium alkyl group, a cyano group, and a halogen atom. Also, the two substituent groups bonded to the nitrogen atom may be chemically bonded to each other. Examples of the substituent groups include -(CH₂)ₘ- (m = integer of 2 to 5), -CH(CH₃)CH(CH₃)-, -CH=CH-CH=CH-, -CH=CH-CH=N-, -CH=CH-N=C-, -CH₂OCH₂-, - (CH₂)₂O(CH₂)₂- and the like.

The pyrrolidinium ring-containing polymer may be produced by subjecting a diallylamine derivative to cyclic polymerization using a radical polymerization catalyst. The cyclic polymerization may be carried out in a solvent such as water or a polar solvent such as methanol, ethanol, isopropanol, formamide, dimethylformamide, dioxane and acetonitrile using a polymerization initiator such as hydrogen peroxide, benzoyl peroxide and tertiary butyl peroxide by known methods, though not particularly limited thereto. In the present invention, a compound having a carbon-carbon unsaturated bond that is polymerizable with the diallylamine derivative may be used as a comonomer component.

In addition, from the standpoints of excellent antistatic properties and wet heat resistance/stability of the resulting film, preferred are polymers having the structure represented by the following formula (1). The polymers as the ammonium group-containing compounds may be in the form of a homopolymer or a copolymer, as well as a copolymer obtained by copolymerizing the compounds with a plurality of the other components.

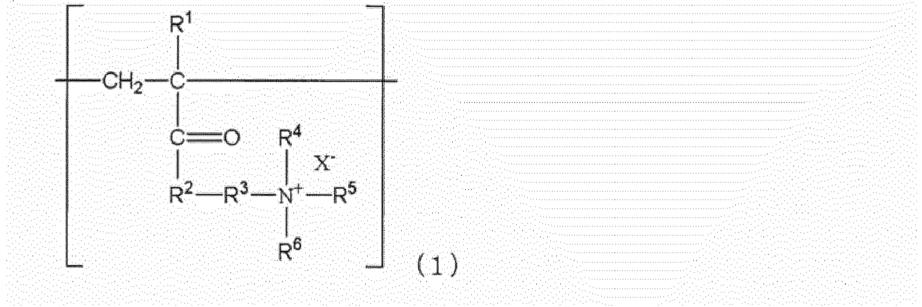

For example, in the above formula (1), the substituent group R¹ is a hydrogen atom or a hydrocarbon group such as an alkyl group having 1 to 20 carbon atoms and a phenyl group; R² is -O-, -NH- or -S-; R³ is an alkylene group having 1 to 20 carbon atoms or the other structure capable of establishing the structure represented by the above formula (1); R⁴, R⁵ and R⁶ are each independently a hydrogen atom, a hydrocarbon group such as an alkyl group having 1 to 20 carbon atoms and a phenyl group, or a hydrocarbon group to which a functional group such as a hydroxyalkyl group is added; and X⁻ represents various counter ions.

Among them, in particular, from the standpoints of excellent antistatic properties and wet heat resistance/stability of the resulting film, in the above formula (1), the substituent R¹ is preferably a hydrogen atom or an alkyl group having 1 to 6 carbon atoms; R³ is preferably an alkyl group having 1 to 6 carbon atoms; and R⁴, R⁵ and R⁶ are preferably each independently a hydrogen atom or an alkyl group having 1 to 6 carbon atoms, and it is more preferable that any one of R⁴, R⁵ and R⁶ is a hydrogen atom, and the other substituent groups are each an alkyl group having 1 to 4 carbon atoms.

Examples of an anion as a counter ion of the ammonium group of the aforementioned ammonium group-containing compound include various ions such as a halogen ion, a sulfonate ion, a phosphate ion, a nitrate ion, an alkyl sulfonate ion and a carboxylate ion.

Also, the number-average molecular weight of the ammonium group-containing compound is usually 1000 to 500000, preferably 2000 to 350000, and more preferably 5000 to 200000. When the number-average molecular weight of the ammonium group-containing compound is less than 1000, the resulting coating film tends to be insufficient in strength or tends to be deteriorated in heat resistance/stability. On the other hand, when the number-average molecular weight of the ammonium group-containing compound is more than 500000, the coating solution tends to have an excessively high viscosity, and therefore tends to be deteriorated in handling properties and coatability.

Examples of the polyether compound include polyethyleneoxide, polyetheresteramides, acrylic resins comprising polyethylene glycol on a side chain thereof, and the like.

The sulfonic group-containing compound means a compound comprising sulfonic acid or a sulfonic acid salt in a molecule thereof. As the sulfonic group-containing compound, there may be suitably used compounds in which a large amount of sulfonic acid or a sulfonic acid salt is present, such as polystyrene sulfonic acid.

Examples of the conductive polymer include polythiophene-based polymers, polyaniline-based polymers, polypyrrole-based polymers, polyacetylene-based polymers, etc. Among these conductive polymers, there may be suitably used polythiophene-based polymers such as polymers in which poly(3,4-ethylenedioxythiophene) is used in combination with polystyrene sulfonic acid. The conductive polymers are more suitably used as compared to the aforementioned other antistatic agents, because they have a low resistivity. However, on the other hand, it is necessary to take any measures such as reduction in amount of the conductive polymers used, if the conductive polymers are used in the applications in which coloration and increased costs should be avoided.

In the preferred embodiment of the present invention, the functional layer provided on the surface of the adhesive film opposed to the surface on which the adhesive layer is provided may also comprise both of the aforementioned release agent and antistatic agent to impart an antistatic-release combined function to the film.

Upon forming the functional layer, in order to improve appearance or transparency of the resulting functional layer and well control slipping properties of the resulting film, it is possible to use various polymers such as polyester resins, acrylic resins and urethane resins as well as crosslinking agents used for forming the adhesive layer in combination with the aforementioned components. In particular, from the standpoints of strengthening the functional layer and reducing occurrence of blocking therein, it is preferred to use a melamine compound, an oxazoline compound, an isocyanate-based compound and an epoxy compound in combination with the aforementioned components. Of these compounds, particularly preferred is the melamine compound.

Also, it is possible to incorporate particles into the functional layer for the purpose of improving anti-blocking properties and slipping properties of the resulting film unless the subject matter of the present invention is adversely influenced by addition of the particles. However, in the case where the functional layer has a release performance, the resulting film exhibits sufficient anti-blocking properties and slipping properties in many cases. Therefore, it is preferred that the particles are not used in the functional layer in combination with the other components from the standpoint of good appearance thereof.

Further, upon forming the adhesive layer and the functional layer, it is also possible to use various additives such as a defoaming agent, a coatability improver, a thickening agent, an organic lubricant, an antistatic agent, an ultraviolet absorber, an antioxidant, a foaming agent, a dye and a pigment, etc., if required, in combination with the aforementioned components, unless the subject matter of the present invention is adversely affected by addition of these additives.

The content of the resin having a glass transition point of not higher than 0°C in the adhesive layer is usually in the range of not less than 30% by weight, preferably not less than 50% by weight, more preferably not less than 65% by weight, even more preferably not less than 75% by weight, and most preferably not less than 85% by weight. When the resin having a glass transition point of not higher than 0°C is used in the aforementioned amount, it is possible to readily attain sufficient adhesion properties of the resulting film.

When incorporating the particles into the adhesive layer, the content of the resin having a glass transition point of not higher than 0°C in the adhesive layer is usually in the range of 30 to 99.99% by weight, preferably 50 to 99.9% by weight, more preferably 65 to 99.5% by weight, even more preferably 75 to 99% by weight, and most preferably 85 to 99% by weight. The content of the particles in the adhesive layer is usually in the range of 0.01 to 70% by weight, preferably 0.1 to 50% by weight, more preferably 0.5 to 35% by weight, even more preferably 1 to 25% by weight, and most preferably 1 to 15% by weight. When the amounts of the resin and the particles used fall within the aforementioned ranges, the resulting film can readily exhibit sufficient adhesion properties, anti-blocking properties and slipping properties.

The content of the epoxy compound in the adhesive layer is usually in the range of not more than 50% by weight, preferably not more than 40% by weight, and more preferably not more than 30% by weight. When using the epoxy compound in the above-specified range, the resulting film can readily exhibit good strength and adhesion properties.

The content of the crosslinking agents other than the epoxy compound in the adhesive layer is usually in the range of not more than 30% by weight, preferably not more than 20% by weight, and more preferably not more than 10% by weight. When using the crosslinking agents other than the epoxy compound in the above-specified range, it is possible to readily attain good strength and well-controlled adhesion properties of the resulting film. However, there tends to occur such a fear that the adhesive layer is excessively deteriorated in adhesion properties depending upon materials or composition used in the adhesive layer. Therefore, in some cases, it is preferred to use none of the crosslinking agents other than the epoxy compound in the adhesive layer.

In the case where the functional layer having a release performance is provided on the surface of the adhesive film opposed to the surface on which the adhesive layer is provided, the content of the release agent in the functional layer is not particularly limited since an appropriate amount of the release agent to be used in the functional layer may vary depending upon the kind of release agent incorporated therein, and is usually in the range of not less than 3% by weight, preferably not less than 15% by weight, and more preferably 25 to 99% by weight. When the content of the release agent in the functional layer is less than 3% by weight, occurrence of blocking in the resulting film tends to be hardly reduced to a sufficient extent.

In the case where the long-chain alkyl compound or fluorine compound is used as the release agent, the content of the long-chain alkyl compound or fluorine compound in the functional layer is usually in the range of not less than 5% by weight, preferably 15 to 99% by weight, more preferably 20 to 95% by weight, and even more preferably 25 to 90% by weight. When using the long-chain alkyl compound or fluorine compound in the above-specified range, it is possible to effectively reduce occurrence of blocking in the resulting film. Also, the content of the crosslinking agent in the functional layer is usually in the range of not more than 95% by weight, preferably 1 to 80% by weight, more preferably 5 to 70% by weight, and even more preferably 10 to 50% by weight. As the crosslinking agent, there are preferably used a melamine compound and an isocyanate-based compound (among them, particularly preferred are blocked isocyanates obtained by blocking isocyanates with an active methylene-based compound), and more preferred is the melamine compound from the standpoint of reducing occurrence of blocking in the resulting film.

When using a condensation-type silicone compound as the release agent, the content of the condensation-type silicone compound in the functional layer is usually in the range of not less than 3% by weight, preferably 5 to 97% by weight, more preferably 8 to 95% by weight, and even more preferably 10 to 90% by weight. When using the condensation-type silicone compound in the above-specified range, it is possible to effectively reduce occurrence of blocking in the resulting film. Also, the content of the crosslinking agent in the functional layer is usually in the range of not more than 97% by weight, preferably 3 to 95% by weight, more preferably 5 to 92% by weight, and even more preferably 10 to 90% by weight. As the crosslinking agent, there is preferably used a melamine compound from the standpoint of reducing occurrence of blocking in the resulting film.

When using an addition-type silicone compound as the release agent, the content of the addition-type silicone compound in the functional layer is usually in the range of not less than 5% by weight, preferably not less than 25% by weight, more preferably not less than 50% by weight, and even more preferably not less than 70% by weight. The upper limit of the content of the addition-type silicone compound in the functional layer is usually 99% by weight, and preferably 90% by weight. When using the addition-type silicone compound in the above-specified range, it is possible to effectively reduce occurrence of blocking in the resulting film, and attain a good appearance of the functional layer.

When using a wax as the release agent, the content of the wax in the functional layer is usually in the range of not less than 10% by weight, preferably 20 to 90% by weight, and more preferably 25 to 70% by weight. When using the wax in the above-specified range, it is possible to effectively reduce occurrence of blocking in the resulting film. However, in the case where the wax is used for the purpose of enhancing decontamination properties on the surface of the functional layer, it is possible to reduce the content of the wax in the functional layer. In such a case, the content of the wax in the functional layer is usually in the range of not less than 1% by weight, preferably 2 to 50% by weight, and more preferably 3 to 30% by weight. Also, the content of the crosslinking agent in the functional layer is usually in the range of not more than 90% by weight, preferably 10 to 70% by weight, and more preferably 20 to 50% by weight. As the crosslinking agent, there is preferably used a melamine compound from the standpoint of reducing occurrence of blocking in the resulting film.

On the other hand, in the case where the functional layer having an antistatic performance is provided on the surface of the adhesive film opposed to the surface on which the adhesive layer is provided, the content of the antistatic agent in the antistatic functional layer is not particularly limited since an appropriate amount of the antistatic agent used in the antistatic functional layer may vary depending upon the kind of antistatic agent incorporated therein, and is usually in the range of not less than 0.5% by weight, preferably 3 to 90% by weight, more preferably 5 to 70% by weight, and even more preferably 8 to 60% by weight. When the content of the antistatic agent in the antistatic functional layer is less than 0.5% by weight, the resulting adhesive film tends to be insufficient in antistatic effect as well as effect of preventing deposition of surrounding contaminants, etc., thereon.

In the case where an antistatic agent other than the conductive polymer is used as the above antistatic agent, the content of the antistatic agent other than the conductive polymer in the antistatic layer is usually in the range of not less than 5% by weight, preferably 10 to 90% by weight, more preferably 20 to 70% by weight, and even more preferably 25 to 60% by weight. When the content of the antistatic agent other than the conductive polymer in the antistatic layer is less than 5% by weight, the resulting film tends to be insufficient in antistatic effect as well as effect of preventing deposition of surrounding contaminants, etc., thereon.

In the case where the conductive polymer is used as the above antistatic agent, the content of the conductive polymer in the antistatic layer is usually in the range of not less than 0.5% by weight, preferably 3 to 70% by weight, more preferably 5 to 50% by weight, and even more preferably 8 to 30% by weight. When the content of the conductive polymer in the antistatic layer is less than 0.5% by weight, the resulting film tends to be insufficient in antistatic effect as well as effect of preventing deposition of surrounding contaminants, etc., thereon.

The analysis of the components in the adhesive layer or the functional layer may be conducted, for example, by analysis methods such as TOF-SIMS, ESCA, fluorescent X-ray analysis and IR.

Upon forming the adhesive layer or the functional layer, the adhesive film is preferably produced by the method in which a solution or a solvent dispersion comprising a series of the above-mentioned compounds is prepared as a coating solution having a concentration of about 0.1 to about 80% by weight in terms of a solid content thereof, and the thus prepared coating solution is applied onto a film. In particular, in the case where the adhesive layer or the functional layer is formed by an in-line coating method, the coating solution is preferably used in the form of an aqueous solution or a water dispersion. The coating solution may also comprise a small amount of an organic solvent for the purpose of improving dispersibility in water, film-forming properties or the like. In addition, the organic solvents may be used alone, or may be appropriately used in combination of any two or more thereof.

It is essentially required that the adhesive layer has a thickness of 1 to 3000 nm. The thickness of the adhesive layer is preferably in the range of 10 to 2000 nm, more preferably 15 to 1000 nm, even more preferably 20 to 700 nm, further even more preferably 30 to 500 nm, and most preferably 40 to 400 nm. When the thickness of the adhesive layer used lies within the above-specified range, the resulting film can readily maintain adequate adhesion properties and anti-blocking properties. In addition, when the film is adhered onto various plastic materials and cut, it is possible to reduce an amount of the components of the adhesive layer squeezed out from the cut film. Although the small thickness of the adhesive layer may cause a weak adhesion strength of the film, squeeze-out of the adhesive layer and occurrence of adhesive residue on an adherend can be inhibited as the thickness of the adhesive layer is reduced, resulting in providing a good film. Further, as the thickness of the adhesive layer is reduced, it is more effective to attain good anti-blocking properties of the resulting film. For this reason, it is important that the thickness of the adhesive layer is appropriately controlled according to the applications of the film. Furthermore, in the case where the adhesive layer is formed by an in-line coating method, the small thickness of the adhesive layer is preferred from the standpoint of facilitated production of the film.

The thickness of the functional layer may vary depending upon the functions imparted to the film, and therefore is not particularly limited. For example, the thickness of the functional layer for imparting a release performance or an antistatic performance to the film is usually in the range of 1 to 3000 nm, preferably 10 to 1000 nm, more preferably 20 to 500 nm, and even more preferably 20 to 200 nm. When the thickness of the functional layer used lies within the above-specified range, the resulting film can be readily improved in anti-blocking properties as well as antistatic performance, and can exhibit a good coating appearance.

As the method of forming the adhesive layer or the functional layer, there may be used conventionally known coating methods such as a gravure coating method, a reverse roll coating method, a die coating method, an air doctor coating method, a blade coating method, a rod coating method, a bar coating method, a curtain coating method, a knife coating method, a transfer roll coating method, a squeeze coating method, an impregnation coating method, a kiss coating method, a spray coating method, a calender coating method, an extrusion coating method, and the like.

The drying and curing conditions used upon forming the adhesive layer on the film are not particularly limited. When forming the adhesive layer by a coating method, the temperature upon drying the solvent used in the coating solution, such as water, is usually in the range of 70 to 150°C, preferably 80 to 130°C, and more preferably 90 to 120°C. The drying time is usually in the range of 3 to 200 sec as a measure, and preferably 5 to 120 sec. In addition, in order to improve strength of the adhesive layer, in the film production process, the adhesive layer is subjected to heat-setting treatment step at a temperature of usually 180 to 270°C, preferably 200 to 250°C, and more preferably 210 to 240°C. The time of the heat-setting treatment step is usually in the range of 3 to 200 sec as a measure, and preferably 5 to 120 sec.

In addition, the heat-setting treatment may be used in combination with irradiation with active energy rays such as irradiation with ultraviolet rays, if required. The film constituting the adhesive film may be previously subjected to surface treatments such as corona treatment and plasma treatment.

It is essential that the adhesive layer has an adhesion strength to a polymethyl methacrylate plate of 1 to 1000 mN/cm. The adhesion strength to a polymethyl methacrylate plate of the adhesive layer is preferably in the range of 3 to 800 mN/cm, more preferably 5 to 500 mN/cm, even more preferably 7 to 30 mN/cm, and further even more preferably 10 to 100 mN/cm. When the adhesion strength to a polymethyl methacrylate plate of the adhesive layer is out of the aforementioned range, the resulting film tends to suffer from problems such as less adhesion strength, excessively strong adhesion strength with difficulty in peeling the film, and occurrence of remarkable blocking of the film, depending upon the kind of adherend. By controlling the adhesion strength to a polymethyl methacrylate plate of the adhesive layer to the aforementioned range, the resulting film can be readily subjected to adhesion-release operations when used in the applications required to satisfy both an adhesion performance and a release performance for releasing the film after the adhesion, for example, when used in a process for production of a polarizing plate, etc., and therefore can provide an optimum film.

To evaluate the anti-blocking properties of the adhesive film, the adhesive films are overlapped on each other and pressed at 40°C and 80% RH under 10 kg/cm² for 20 hr. Thereafter, the resulting laminate is subjected to peel test to measure a delamination load thereof. The delamination load of the adhesive film is usually in the range of not more than 100 g/cm, preferably not more than 30 g/cm, more preferably not more than 20 g/cm, even more preferably not more than 10 g/cm, and most preferably not more than 8 g/cm. When the delamination load of the adhesive film falls within the aforementioned range, risk of blocking of the film can be readily avoided, so that it is possible to provide the film having a higher practicability.

In addition, as one of the methods of improving anti-blocking properties against the adhesive layer side, the surface of the adhesive film opposed to its surface on which the adhesive layer is formed may be roughened. The roughness of the surface of the adhesive film on the side opposed to the adhesive layer may vary depending upon the kind or adhesion strength of the adhesive layer, and therefore is not particularly limited. However, in the case where it is intended to improve the anti-blocking properties of the film by controlling the surface roughness thereof, the arithmetic average roughness (Sa) of the surface of the adhesive film on the side opposed to the adhesive layer is usually in the range of not less than 5 nm, preferably not less than 10 nm, and more preferably not less than 30 nm. Although the upper limit of the arithmetic average roughness (Sa) is not particularly limited, the upper limit of a preferred range of the arithmetic average roughness (Sa) is 300 nm from the standpoint of good transparency of the resulting film.

With respect to a friction coefficient of the adhesive film as an index of slipping properties thereof, the static friction coefficient between the adhesive layer side surface of the adhesive film and the surface thereof on the side opposed to the adhesive layer (functional layer side surface, if any) is usually in the range of not more than 1.1, preferably not more than 1.0, more preferably not more than 0.9, and even more preferably not more than 0.8. When the friction coefficient lies within the aforementioned range, the resulting film can exhibit good slipping properties which are useful to attain good handing properties and scratch resistance of the film.

### Examples

The present invention is described in more detail below by Examples. However, these Examples are only illustrative and not intended to limit the present invention thereto, and other changes or modifications are also possible unless they depart from the scope of the present invention. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter (d50; µm):

Using a centrifugal precipitation type particle size distribution measuring apparatus "SA-CP3 Model" manufactured by Shimadzu Corp., the particle size corresponding to a cumulative fraction of 50% (on a weight basis) in equivalent spherical distribution of the particles was measured as an average particle diameter of the particles.

### (3) Method of measuring arithmetic average roughness (Sa):

The surface of the film obtained in the below-mentioned respective Examples and Comparative Examples was measured for a surface roughness on the side opposed to the adhesive layer thereof using a non-contact surface/layer section profile measuring system "VertScan (registered trademark) R550GML" manufactured by Ryoka Systems Inc., under the following conditions: CCD camera: "SONY HR-501/3'"; objective lens, magnification: 20 times; lens barrel: "IX Body"; zoom lens: "No Relay"; wavelength filter: "530 white"; measuring mode: Wave, and the value outputted by correction according to a 4th-order polynomial was used as the arithmetic average roughness (Sa).

### (4) Method of measuring thickness of adhesive layer:

The surface of the adhesive layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the adhesive layer using TEM ("H-7650" manufactured by Hitachi High-Technologies; accelerated voltage: 100 V).

### (5) Glass transition point:

Using a differential scanning calorimeter (DSC) "8500" manufactured by PerkinElmer Japan Co., Ltd., the glass transition point was measured in a temperature range of -100 to 200°C at a temperature rise rate of 10°C/min.

### (6) Method of measuring number-average molecular weight:

The measurement of the molecular weight was conducted using a GPC apparatus "HLC-8120GPC" manufactured by Tosoh Corp. The number-average molecular weight was calculated in terms of polystyrene.

### (7) Determination of functional group of silicone:

Using NMR "AVANCE III600" manufactured by Bruker BioSpin K.K., the polyether group-containing silicone was subjected to assignment of the respective peaks of 1H-NMR to determine amounts of dimethyl siloxane and polyether group and confirm whether or not vinyl silane or hydrogen silane was present therein.

### (8-1) Method of evaluating adhesion strength (adhesion strength 1):

The surface of the adhesive layer of the adhesive film having a width of 5 cm was attached onto a surface of a polymethyl methacrylate plate "COMOGLAS (registered trademark; thickness: 1 mm)" produced by KURARAY Co., Ltd., and a 2 kg rubber roller having a width of 5 cm was moved over the adhesive film by one reciprocative motion to press-bond the adhesive film onto the polymethyl methacrylate plate. The resulting laminate was allowed to stand at room temperature for 1 hr to measure a peel force of the adhesive film. The measurement of the peel force was conducted by 180° peel test at an elastic stress rate of 300 mm/min using "Ezgraph" manufactured by Shimadzu Corporation.

### (8-2) Method of evaluating adhesion strength (adhesion strength 2):

The same procedure for evaluating the adhesive strength as in the above item (8-1) was conducted except that the polymethyl methacrylate plate used in the item (8-1) was replaced with a polycarbonate plate (having a thickness of 1 mm).

### (8-3) Method of evaluating adhesion strength (adhesion strength 3):

The same procedure for evaluating the adhesive strength as in the above item (8-1) was conducted except that the polymethyl methacrylate plate used in the item (8-1) was replaced with the surface of the polyester film having no adhesive layer obtained in the below-mentioned Comparative Example 1.

### (9) Method of evaluating reworkability of adhesive layer:

One sheet of the A4 size adhesive polyester film was overlapped with the A4 size polyester film obtained in the below-mentioned Comparative Example 1 on which no adhesive layer was formed, such that the adhesive layer-side surface of the adhesive film was faced and overlapped onto the latter polyester film, and both the films were strongly pressed with fingers to evaluate adhesion properties thereof. The evaluation ratings of the adhesion properties are as follows.
5 Points: Even when lightly pressing the overlapped films with fingers, both the films could be adhered to each other and held in such an adhered state even by suspendedly supporting the film having the adhesive layer only;
4 Points: When strongly pressing the overlapped films with fingers, both the films could be adhered to each other and held in such an adhered state even by suspendedly supporting the film having the adhesive layer only;
3 Points: When strongly pressing the overlapped films with fingers, both the films could be adhered to each other and held in such an adhered state for a while even by suspendedly supporting the film having the adhesive layer only, but the films was peeled off and delaminated from each other within 3 sec;
2 Points: When strongly pressing the overlapped films with fingers, the films exhibited slight adhesion properties therebetween, but the adhered condition between the films could not be held; and
1 Point: Even when strongly pressing the overlapped films with fingers, the films could exhibit no adhesion properties therebetween.

After peeling the film from each other, the film to be evaluated was subjected again to the same test as described above at the same position of the film. The evaluation ratings of the reworkability are as follows.
A: The same evaluation results were attained; and
B: The film was deteriorated in adhesion properties.

### (10) Method of evaluating adhesive residue (transfer properties) of adhesive layer:

In the aforementioned evaluation method (9), a portion of the film from which the adhesive film was peeled off was observed to examine whether or not any adhesive residue (traces of transfer of the adhesive layer) was present thereon. The evaluation ratings of the adhesive residue are as follows.
A: No adhesive residue (traces of transfer of the adhesive layer) was present; and
B: Adhesive residue was present.

### (11) Method of measuring anti-blocking properties:

The two polyester films to be measured were prepared and overlapped on each other such that the adhesive layer side of one polyester film was faced to the opposite side (functional layer side) of the other polyester film. The area of 12 cm x 10 cm of the obtained laminate was pressed at 40°C and 80% RH under 10 kg/cm² for 20 hr. Thereafter, the films were peeled off from each other by the method as prescribed in ASTM D1893 to measure a delamination load between the films.

As the delamination load is reduced, the film suffers from less occurrence of blocking and therefore can exhibit good anti-blocking properties. The delamination load of the film is usually in the range of not more than 100 g/cm, preferably not more than 30 g/cm, more preferably not more than 20 g/cm, even more preferably not more than 10 g/cm, and most preferably not more than 8 g/cm. Meanwhile, the film showing a delamination load of more than 300 g/cm in the present evaluation, the film being broken during the evaluation or the film that apparently suffers from blocking by pressing is not practically usable, and these films are expressed by the mark "X".

### (12) Friction coefficient:

The adhesive film was adhered onto a flat glass plate having a width of 10 mm and a length of 100 mm such that the adhesive layer side surface thereof was faced upward, and another adhesive film cut into a size of 18 mm in width and 120 mm in length was adhered thereonto such that the surface of the film on the side opposed to the adhesive layer (the side of a functional layer, if any) was faced downward. A metal pin having a diameter of 8 mm was pressed against the film and slid thereover in a longitudinal direction of the glass plate under an applied load of 30 g at a rate of 40 mm/min to measure a friction force thereof. The friction coefficient measured at a starting point of the slide motion of the metal pin was evaluated as a static friction coefficient (friction coefficient 1), whereas the friction coefficient measured at the point at which the metal pin was slid 10 mm from the starting point was evaluated as a dynamic friction coefficient (friction coefficient 2). Meanwhile, the measurement of the friction coefficient was conducted in a measuring atmosphere of room temperature (23°C) and 50% RH. When the measurement runout was large with a higher friction coefficient value, the median value of the runout was defined as the friction coefficient, whereas when the median value of the runout is difficult to read out owing to the much higher friction coefficient value, the measurement result was expressed by the mark "X".

### (13) Method of measuring surface resistivity:

Using a high resistance meter "HP4339B" and a measuring electrode "HP16008B" both manufactured by Hewlett Packard Japan Ltd., after the polyester film was fully moisture-controlled in a measuring atmosphere of 23°C and 50% RH, a voltage of 100 V was applied to the film for 1 min, and then the surface resistivity of the adhesive layer of the film was measured.

### (14) Method of evaluating deposition of dirt and dusts onto functional layer (antistatic layer) side:

The polyester film was fully moisture-controlled in a measuring atmosphere of 23°C and 50% RH, and then the antistatic layer of the film was rubbed with cotton cloth by 10 reciprocative motions. The thus rubbed antistatic layer of the film was slowly approached to finely crushed tobacco ash to evaluate adhesion of the ash thereonto according to the following evaluation ratings.
A: No adhesion of ash onto the film occurred even when contacted with the ash;
B: Slight adhesion of ash onto the film occurred when contacted with the ash; and
C: A large amount of ash was adhered onto the film even when merely approached to the ash.

The polyesters used in the respective Examples and Comparative Examples were prepared by the following methods.

### <Method for producing polyester (A)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester as produced, were subjected to esterification reaction at 260°C in a nitrogen atmosphere. Successively, tetrabutyl titanate in an amount of 50 ppm based on the polyester as produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (A) having an intrinsic viscosity of 0.63 and a diethylene glycol content of 2 mol%.

### <Method for producing polyester (B)>

One hundred parts by weight of dimethyl terephthalate and 60 parts by weight of ethylene glycol as well as magnesium acetate tetrahydrate as a catalyst in an amount of 900 ppm based on the polyester as produced, were subjected to esterification reaction at 225°C in a nitrogen atmosphere. Successively, orthophosphoric acid and germanium dioxide in amounts of 3500 ppm and 70 ppm, respectively, based on the polyester as produced, were added to the reaction solution. While heating the resulting mixture to 280°C over 2 hr and 30 min, the pressure of the reaction system was reduced to an absolute pressure of 0.4 kPa, and further the mixture was subjected to melt-polycondensation for 85 min, thereby obtaining a polyester (B) having an intrinsic viscosity of 0.64 and a diethylene glycol content of 2 mol%.

### <Method for producing polyester (C)>

The same procedure as used in the above method for producing the polyester (A) was conducted except that silica particles having an average particle diameter of 2 *µ*m were added in an amount of 0.3 part by weight before the melt-polycondensation, thereby obtaining a polyester (C).

### <Method for producing polyester (D)>

The same procedure as used in the above method for producing the polyester (A) was conducted except that silica particles having an average particle diameter of 3 *µ*m were added in an amount of 0.6 part by weight before the melt-polycondensation, thereby obtaining a polyester (D).

Examples of the compounds constituting the adhesive layer and the functional layer are as follows.

### (Examples of compounds)

### •Polyester resin: (IA)

Water dispersion of polyester resin (glass transition point: -20°C) obtained from the following composition:
Monomer composition: (acid component) dodecanedicarboxylic acid/terephthalic acid/isophthalic acid/5-sodium sulfoisophthalic acid//(diol component) ethylene glycol/1,4-butanediol = 20/38/38/4//40/60 (mol%).

### •Polyester resin: (IB)

Water dispersion of polyester resin (glass transition point: -30°C) obtained from the following composition:
Monomer composition: (acid component) dodecanedicarboxylic acid/terephthalic acid/isophthalic acid/5-sodium sulfoisophthalic acid//(diol component) ethylene glycol/1,4-butanediol = 30/33/33/4//40/60 (mol%).

### •Polyester resin: (IC)

Water dispersion of polyester resin (glass transition point: 30°C) obtained from the following composition:
Monomer composition: (acid component) terephthalic acid/isophthalic acid/5-sodium sulfoisophthalic acid//(diol component) ethylene glycol/1,4-butanediol/diethylene glycol = 40/56/4//45/25/30 (mol%).

### •Polyester resin: (ID)

Water dispersion of polyester resin obtained from the following composition:
Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%).

### •Acrylic resin: (IIA)

Water dispersion of acrylic resin (glass transition point: -25°C) obtained from the following composition:
Normal butyl acrylate/methyl acrylate/2-hydroxyethyl methacrylate/acrylic acid = 72/23/3/2 (% by weight).

### •Acrylic resin: (IIB)

Water dispersion of acrylic resin (glass transition point: -40°C) obtained from the following composition:
Normal butyl acrylate/2-ethylhexyl acrylate/ethyl acrylate/2-hydroxyethyl methacrylate/acrylic acid = 30/30/36/2/2 (% by weight).

### •Acrylic resin: (IIC)

Water dispersion of acrylic resin (glass transition point: -50°C) obtained from the following composition:
2-Ethylhexyl acrylate/lauryl methacrylate/2-hydroxyethyl methacrylate/acrylic acid/methacrylic acid = 50/25/15/5/5 (% by weight).

### •Acrylic resin: (IID)

Water dispersion of acrylic resin (glass transition point: -55°C) obtained from the following composition:
2-Ethylhexyl acrylate/vinyl acetate/acrylic acid = 78/20/2 (% by weight).

### •Acrylic resin: (IIE)

Water dispersion of acrylic resin (glass transition point: 10°C) obtained from the following composition:
Ethyl acrylate/normal butyl methacrylate/acrylic acid = 25/73/2 (% by weight).

### •Urethane resin: (III)

Water dispersion of a urethane resin (glass transition point: -30°C) obtained by neutralizing a resin comprising 80 parts of a polycarbonate polyol having a number-average molecular weight of 2000 which was produced from 1,6-hexanediol and diethyl carbonate, 4 parts of polyethylene glycol having a number-average molecular weight of 400, 12 parts of methylene-bis(4-cyclohexyl isocyanate) and 4 parts of dimethylol butanoic acid with triethylamine.

### •Epoxy compound: (IVA)

Polyglycerol polyglycidyl ether as a polyfunctional polyepoxy compound.

### •Melamine compound: (IVB)

Hexamethoxymethylol melamine

### •Oxazoline compound: (IVC)

Acrylic polymer having an oxazoline group and a polyalkyleneoxide chain "EPOCROSS" (oxazoline group content: 4.5 mmol/g) produced by Nippon Shokubai Co., Ltd.

### •Isocyanate-based compound: (IVD)

While stirring 1000 parts of hexamethylene diisocyanate at 60°C, 0.1 part of tetramethyl ammonium caprylate as a catalyst was added thereto. After 4 hr, 0.2 part of phosphoric acid was added to the reaction mixture to terminate the reaction, thereby obtaining an isocyanurate-type polyisocyanate composition. Then, 100 parts of the thus obtained isocyanurate-type polyisocyanate composition, 42.3 parts of methoxy polyethylene glycol having a number-average molecular weight of 400 and 29.5 parts of propylene glycol monomethyl ether acetate were charged to a reaction vessel, and held at 80°C for 7 hr. Thereafter, while maintaining the temperature of the reaction solution at 60°C, 35.8 parts of methyl isobutanoyl acetate, 32.2 parts of diethyl malonate and 0.88 part of a 28% methanol solution of sodium methoxide were added to the reaction solution, and the resulting reaction mixture was maintained for 4 hr. Then, 58.9 parts of n-butanol was added to the reaction mixture, and the obtained reaction solution was maintained at 80°C for 2 hr. Thereafter, 0.86 part of 2-ethylhexyl acid phosphate was added to the reaction solution, thereby obtaining an active methylene-blocked polyisocyanate.

### • Particles: (VA)

Silica particles having an average particle diameter of 25 nm.

### • Particles: (VB)

Silica particles having an average particle diameter of 45 nm.

### • Particles: (VC)

Silica particles having an average particle diameter of 65 nm.

### • Particles: (VD)

Silica particles having an average particle diameter of 80 nm.

### • Particles: (VE)

Silica particles having an average particle diameter of 140 nm.

### • Particles: (VF)

Silica particles having an average particle diameter of 450 nm.

### • Release agent (long-chain alkyl group-containing compound): (VIA)

A four-necked flask was charged with 200 parts of xylene and 600 parts of octadecyl isocyanate, and the contents of the flask were heated while stirring. From the time at which refluxing of xylene was initiated, 100 parts of polyvinyl alcohol having an average polymerization degree of 500 and a saponification degree of 88 mol% was added little by little to the flask at intervals of 10 min over about 2 hr. After completion of the addition of polyvinyl alcohol, the contents of the flask were further refluxed for 2 hr, and then the reaction thereof was stopped. The obtained reaction mixture was cooled to about 80°C, and then added to methanol, thereby obtaining a white precipitate as a reaction product. The resulting precipitate was separated from the reaction mixture by filtration, and 140 parts of xylene was added thereto. The obtained mixture was heated to completely dissolve the precipitate in xylene, and then methanol was added again thereto to obtain a precipitate. The precipitation procedure was repeated several times. Thereafter, the resulting precipitate was washed with methanol, and then dried and pulverized, thereby obtaining the release agent.

### • Release agent (fluorine compound): (VIB)

Water dispersion of fluorine compound obtained from the following composition:
Octadecyl acrylate/perfluorohexylethyl methacrylate/vinyl chloride = 66/17/17 (% by weight).

### • Polyether group-containing condensation-type silicone: (VIC)

Polyether group-containing silicone having a number-average molecular weight of 7000 and comprising polyethylene glycol (end group: hydroxyl group) having a number of ethylene glycol chains of 8 in which a molar ratio of polyethylene glycol to dimethyl siloxane were 1:100, on a side chain of the dimethyl silicone (assuming that a molar amount of a siloxane bond in the silicone is 1, a molar ratio of an ether bond in the polyether group is 0.07). In the polyether group-containing condensation type silicone, low molecular weight components having a number-average molecular weight of not more than 500 were present in an amount of 3%, and neither a vinyl group bonded to silicon (vinyl silane) nor a hydrogen group bonded to silicon (hydrogen silane) was present. Meanwhile, the present compound was used in the form of a water dispersion of the composition prepared by blending the polyether group-containing silicone with sodium dodecylbenzenesulfonate at a weight ratio of 1:0.25.

### • Addition-type silicone: (VID)

Water dispersion of an addition-type silicone prepared by mixing the compounds at the following compositional ratio:
Water dispersion comprising 80% by weight of methyl vinyl polysiloxane comprising 0.6 mol% of a vinyl group, 5% by weight of methyl hydrogen polysiloxane comprising 30 mol% of a hydrogen silane group (hydrogen group), 5% by weight of 3-glycidoxypropyl trimethoxysilane, 10% by weight of polyethylene glycol butyl ether, and a platinum catalyst.

### • Wax: (VIE)

Wax emulsion prepared by charging 300 g of a polyethyleneoxide wax having a melting point of 105°C, an acid value of 16 mgKOH/g, a density of 0.93 g/mL and a number-average molecular weight of 5000, 650 g of ion-exchanged water, 50 g of decaglycerol monooleate as a surfactant and 10 g of a 48% potassium hydroxide aqueous solution into a 1.5 L-capacity emulsification facility equipped with a stirrer, a thermometer and a temperature controller, followed by replacing an inside atmosphere of the facility with nitrogen and then hermetically sealing the facility; subjecting the contents of the facility to highspeed stirring at 150°C for 1 hr and then cooling the contents of the facility to 130°C; and allowing the resulting reaction mixture to pass through a high-pressure homogenizer under a pressure of 400 atm and then cooling the obtained mixture to 40°C.

### • Antistatic agent (quaternary ammonium salt compound): (VIIA)

Polymer having a pyrrolidinium ring on a main chain thereof which was prepared by polymerizing the following composition:
Diallyl dimethyl ammonium chloride/dimethyl acrylamide/N-methylol acrylamide = 90/5/5 (mol%). Number-average molecular weight: 30000.

### • Antistatic agent (ammonium group-containing compound): (VIIB)

High-molecular weight compound having a number-average molecular weight of 50000 which was constituted of a constitutional unit represented by the following formula 2 and whose counter ion was a methanesulfonic acid ion.

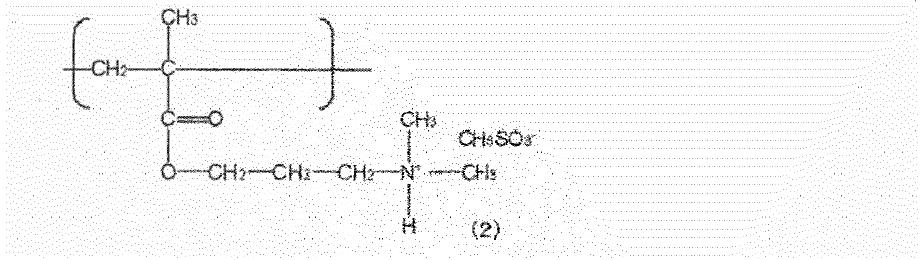

### Example 1:

A mixed raw material obtained by mixing the polyesters (A), (B) and (C) in amounts of 91%, 3% and 6%, respectively, as a raw material for outermost layers (surface layers), and a mixed raw material obtained by mixing the polyesters (A) and (B) in amounts of 97% and 3%, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 3:44:3 as output), followed by cooling and solidifying the thus extruded sheet on the chilled roll, thereby obtaining an undrawn sheet. Next, the thus obtained undrawn sheet was drawn utilizing a difference between peripheral speeds of rolls at 85°C at a draw ratio of 3.2 times in a longitudinal direction thereof. Thereafter, a film such that the thickness of the resulting adhesive layer (after drying) was 15 nm, and a coating solution B3 shown in Table 2 below was applied on an opposite side surface of the longitudinally drawn film such that the thickness of the resulting functional layer (after drying) was 30 nm. Then, the resulting film was introduced into a tenter where the film was dried at 95°C for 10 sec and then drawn at 120°C at a draw ratio of 4.3 times in a lateral direction thereof, and further subjected to heat-setting treatment at 230°C for 10 sec. Next, the obtained drawn sheet was relaxed by 2% in a lateral direction thereof, thereby obtaining a polyester film having a thickness of 50 *µ*m and Sa of 9 nm on the functional layer side surface thereof.

As a result of evaluating the thus obtained polyester film, it was confirmed that the polyester film had an adhesion strength of 6 mN/cm, and therefore exhibited good adhesion properties as well as good anti-blocking properties. Various properties of the thus obtained film are shown in Tables 3 and 4 below.

### Examples 2 to 58:

The same procedure as in Example 1 was conducted except that the coating agent composition was replaced with those shown in Tables 1 and 2, thereby obtaining polyester films. As shown in Tables 3 to 6, the resulting polyester films exhibited good adhesion strength and anti-blocking properties.

### Examples 59 to 74:

The same procedure as in Example 1 was conducted except that the coating agent composition was replaced with those shown in Tables 1 and 2, thereby obtaining polyester films. As shown in Tables 7 and 8, the resulting polyester films exhibited good adhesion strength, anti-blocking properties and antistatic performance.

### Examples 75 to 78:

The same procedure as in Example 1 was conducted except that the polyester composition for the surface layer on the side opposed to the adhesive layer was changed to a mixed raw material obtained by mixing the polyesters (A), (B) and (D) in amounts of 72%, 3% and 25%, respectively, and the respective mixed raw materials were co-extruded into a three-kind/three-layer structure (surface layer on adhesive layer side/intermediate layer/surface layer on side opposed to adhesive layer = 3:19:3 as output), and further the coating agent composition was replaced with those shown in Tables 1 and 2, thereby obtaining polyester films. The thus obtained polyester films had Sa of 30 nm on the surface thereof on the side opposed to the adhesive layer, and also exhibited good adhesion strength and anti-blocking properties. Various properties of these films are shown in Tables 9 and 10 below.

### Examples 79 and 80:

The same procedure as in Example 1 was conducted except that the coating agent composition was replaced with those shown in Tables 1 and 2, thereby obtaining polyester films. As shown in Tables 11 and 12, the resulting polyester films were deteriorated in anti-blocking properties, but exhibited good adhesion strength.

### Example 81:

The same procedure as in Example 1 was conducted except that neither the adhesive layer nor the functional layer was provided, thereby obtaining a polyester film. The thus obtained polyester film having none of the adhesive layer and the functional layer was coated with a coating solution A1 shown in Table 1 below such that the resulting adhesive layer had a thickness of 130 nm (after drying), and then dried at 100°C for 60 s, thereby obtaining a polyester film on which the adhesive layer was formed by an off-line coating method. As shown in Tables 11 and 12, the resulting polyester film was deteriorated in transfer properties and anti-blocking properties, but exhibited good adhesion strength.

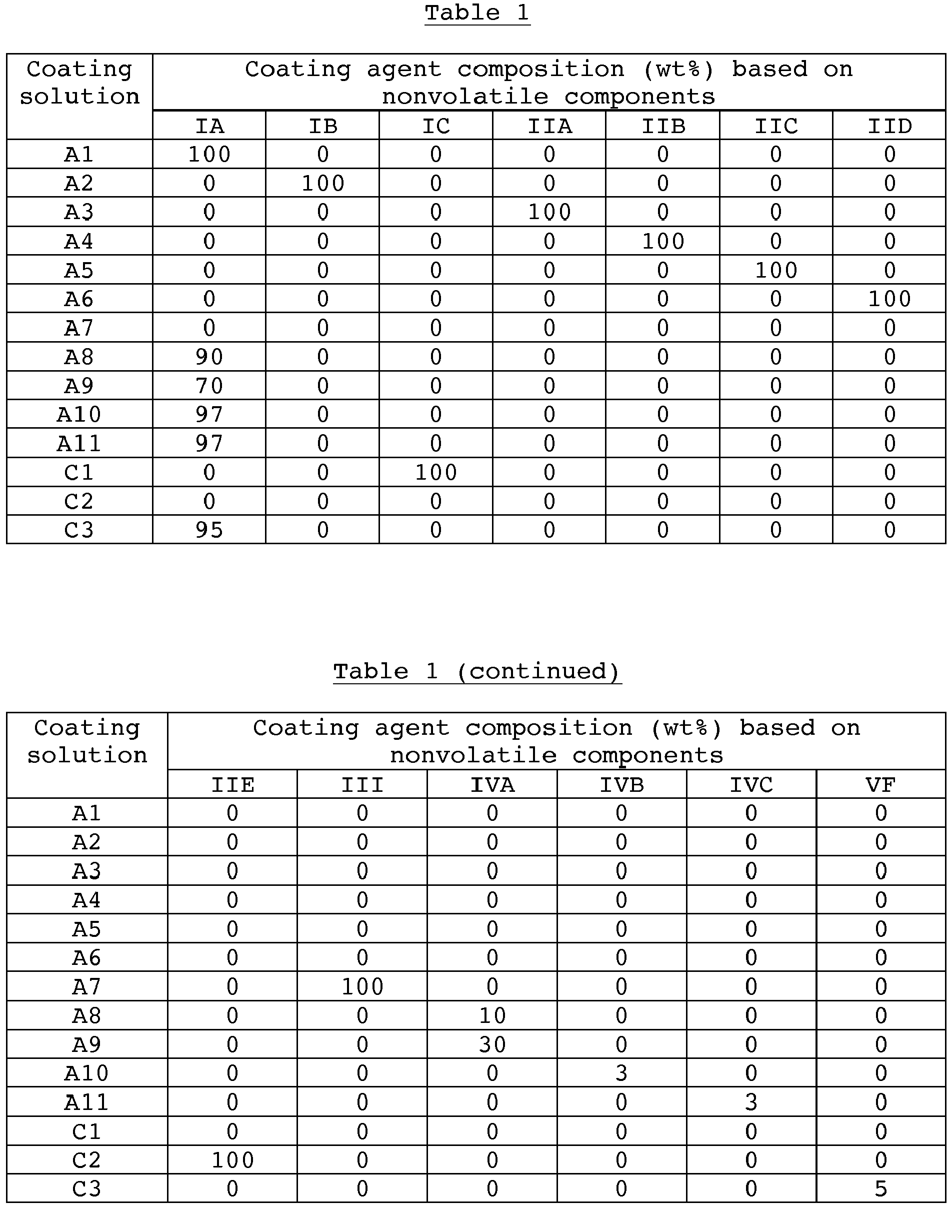

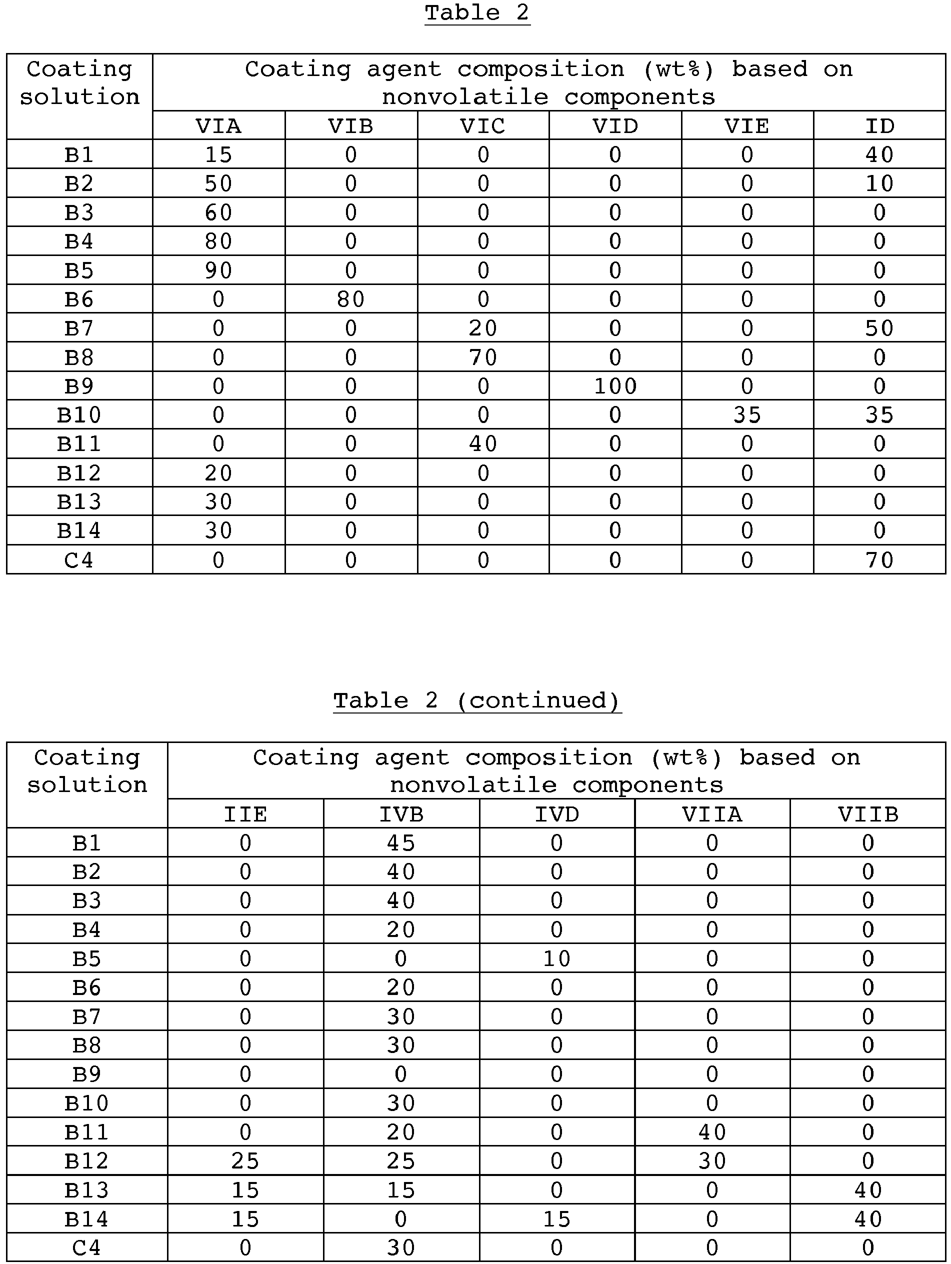

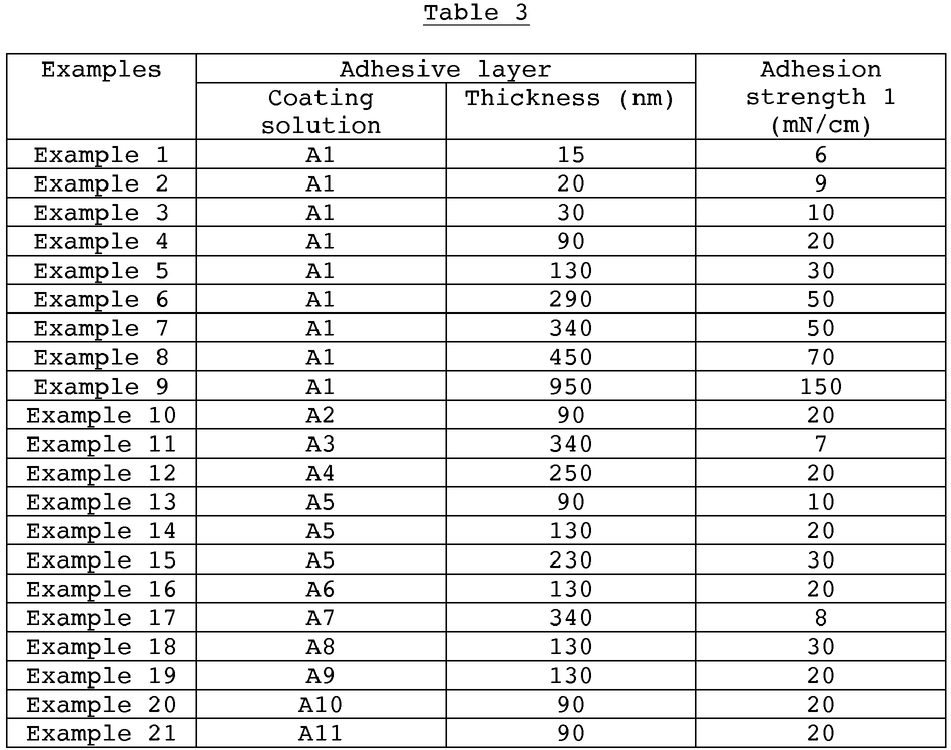

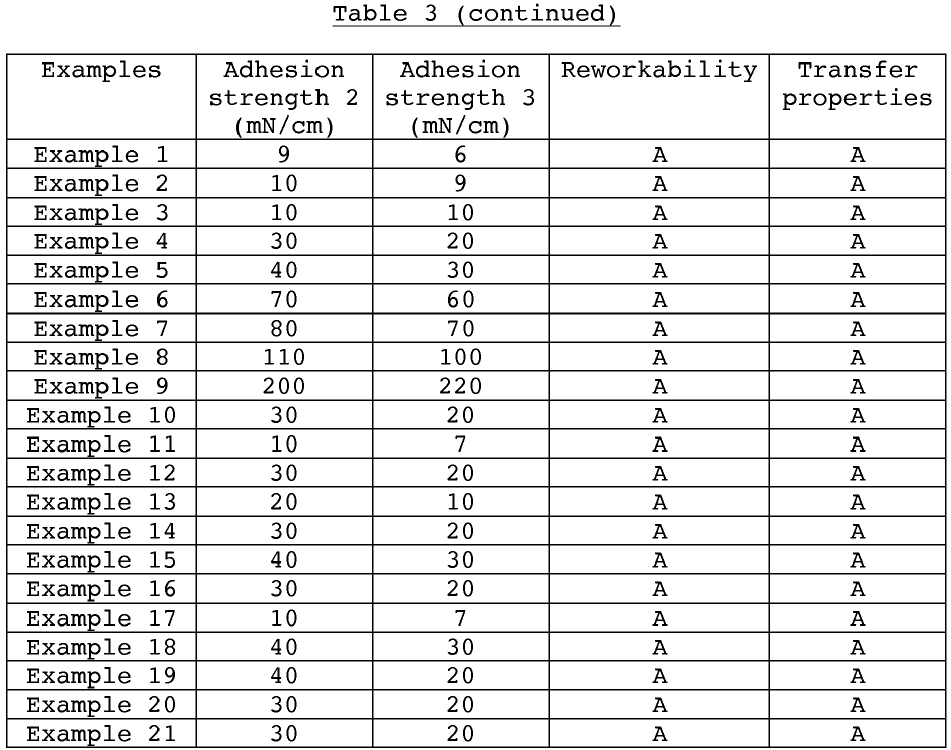

**Table 4**

| Examples | Functional layer | | Anti-blocking properties (g/cm) | Friction coefficient | |
|---|---|---|---|---|---|
| | Coating solution | Thickness (nm) | | 1 | 2 |
| Example 1 | B3 | 30 | 2 | 0.9 | 0.5 |
| Example 2 | B3 | 30 | 2 | 1.0 | 0.5 |
| Example 3 | B3 | 30 | 2 | 1.0 | 0.7 |
| Example 4 | B3 | 30 | 4 | 1.1 | 0.8 |
| Example 5 | B3 | 30 | 4 | 1.2 | 0.8 |
| Example 6 | B3 | 30 | 5 | 1.3 | 0.9 |
| Example 7 | B3 | 30 | 7 | 1.4 | 0.9 |
| Example 8 | B3 | 30 | 9 | 1.5 | 1.0 |
| Example 9 | B3 | 30 | 30 | X | X |
| Example 10 | B3 | 30 | 4 | 1.1 | 0.8 |
| Example 11 | B3 | 30 | 3 | 1.0 | 0.7 |
| Example 12 | B3 | 30 | 2 | 1.0 | 0.8 |
| Example 13 | B3 | 30 | 3 | 1.0 | 0.7 |
| Example 14 | B3 | 30 | 3 | 1.1 | 0.8 |
| Example 15 | B3 | 30 | 4 | 1.1 | 0.8 |
| Example 16 | B3 | 30 | 3 | 1.1 | 0.8 |
| Example 17 | B3 | 30 | 4 | 1.0 | 0.7 |
| Example 18 | B3 | 30 | 4 | 1.2 | 0.8 |
| Example 19 | B3 | 30 | 5 | 1.2 | 0.8 |
| Example 20 | B3 | 30 | 4 | 1.1 | 0.8 |
| Example 21 | B3 | 30 | 4 | 1.1 | 0.8 |

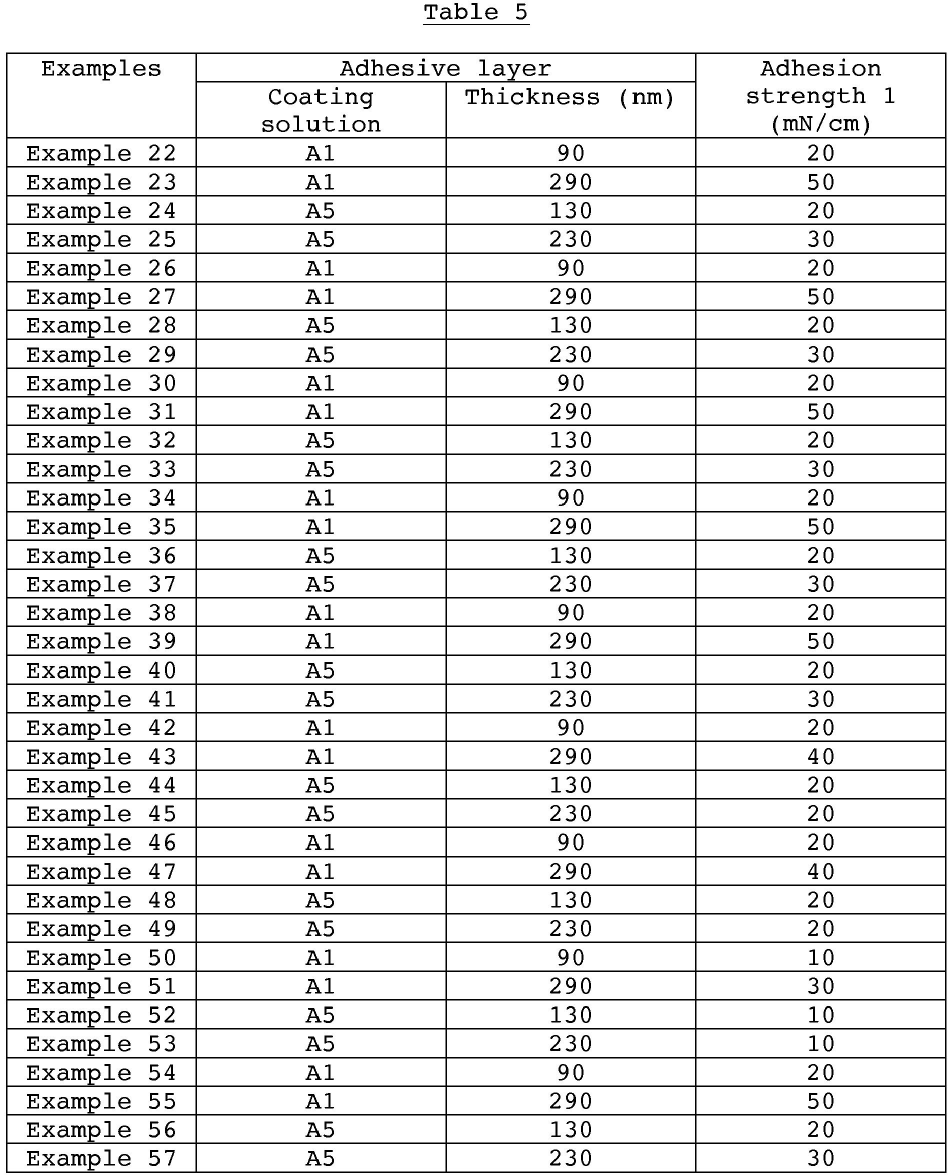

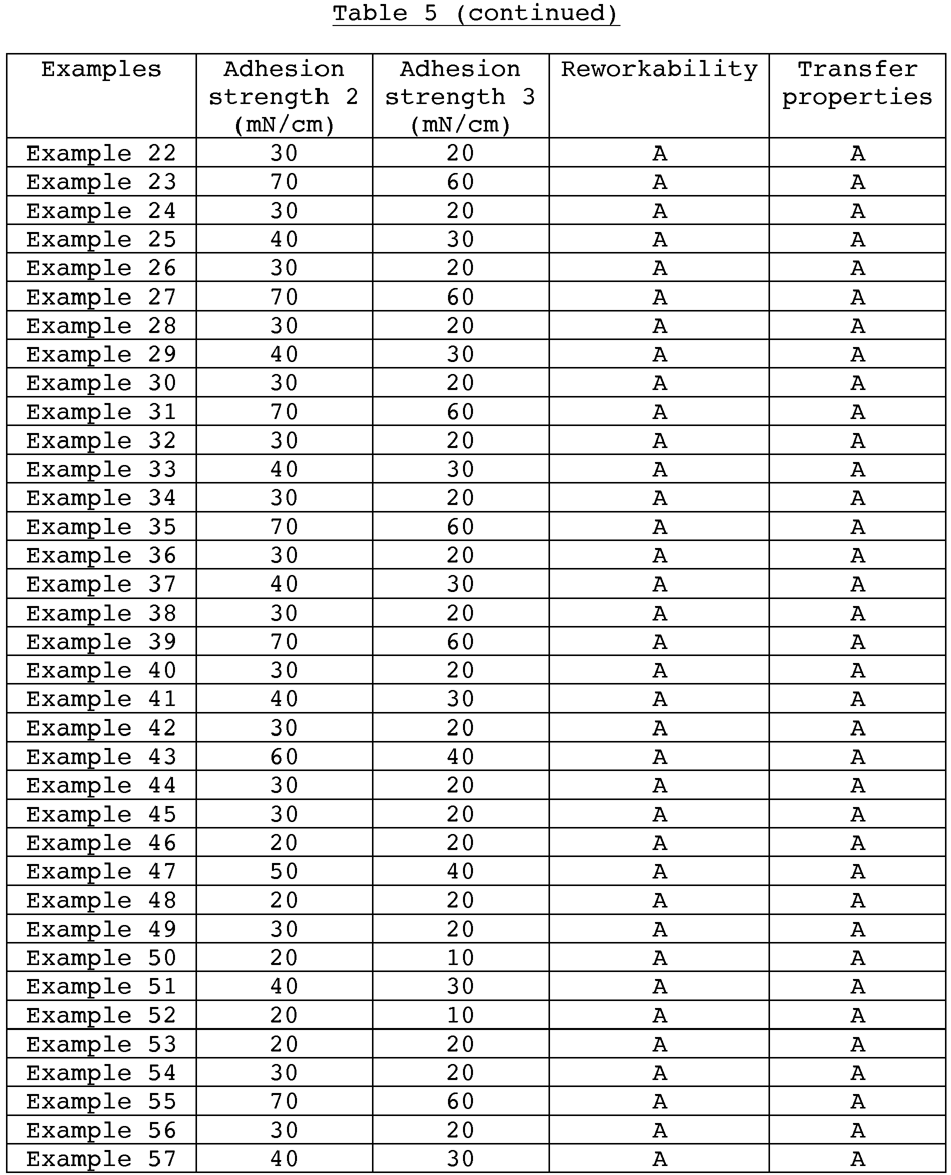

**Table 6**

| Examples | Functional layer | | Anti-blocking properties (g/cm) | Friction coefficient | |
|---|---|---|---|---|---|
| | Coating solution | Thickness (nm) | | 1 | 2 |
| Example 22 | B1 | 30 | 5 | 1.1 | 0.8 |
| Example 23 | B1 | 30 | 8 | 1.3 | 0.9 |
| Example 24 | B1 | 30 | 4 | 1.1 | 0.8 |
| Example 25 | B1 | 30 | 6 | 1.1 | 0.8 |
| Example 26 | B2 | 30 | 5 | 1.1 | 0.8 |
| Example 27 | B2 | 30 | 6 | 1.3 | 0.9 |
| Example 28 | B2 | 30 | 3 | 1.1 | 0.8 |
| Example 29 | B2 | 30 | 5 | 1.1 | 0.8 |
| Example 30 | B4 | 30 | 4 | 1.1 | 0.8 |
| Example 31 | B4 | 30 | 5 | 1.3 | 0.9 |
| Example 32 | B4 | 30 | 3 | 1.1 | 0.8 |
| Example 33 | B4 | 30 | 4 | 1.1 | 0.8 |
| Example 34 | B5 | 30 | 3 | 1.1 | 0.8 |
| Example 35 | B5 | 30 | 4 | 1.3 | 0.9 |
| Example 36 | B5 | 30 | 3 | 1.1 | 0.8 |
| Example 37 | B5 | 30 | 3 | 1.1 | 0.8 |
| Example 38 | B6 | 30 | 4 | 1.1 | 0.8 |
| Example 39 | B6 | 30 | 5 | 1.3 | 0.9 |
| Example 40 | B6 | 30 | 3 | 1.1 | 0.8 |
| Example 41 | B6 | 30 | 4 | 1.1 | 0.8 |
| Example 42 | B7 | 50 | 1 | 1.1 | 0.8 |
| Example 43 | B7 | 50 | 2 | 1.3 | 0.9 |
| Example 44 | B7 | 50 | 1 | 1.1 | 0.8 |
| Example 45 | B7 | 50 | 1 | 1.1 | 0.8 |
| Example 46 | B8 | 50 | 1 | 1.1 | 0.8 |
| Example 47 | B8 | 50 | 2 | 1.2 | 0.9 |
| Example 48 | B8 | 50 | 1 | 1.1 | 0.8 |
| Example 49 | B8 | 50 | 1 | 1.1 | 0.8 |
| Example 50 | B9 | 100 | 1 | 1.0 | 0.7 |
| Example 51 | B9 | 100 | 2 | 1.2 | 0.8 |
| Example 52 | B9 | 100 | 1 | 0.9 | 0.6 |
| Example 53 | B9 | 100 | 1 | 1.0 | 0.7 |
| Example 54 | B10 | 30 | 5 | 1.1 | 0.8 |
| Example 55 | B10 | 30 | 8 | 1.3 | 0.9 |
| Example 56 | B10 | 30 | 4 | 1.1 | 0.8 |
| Example 57 | B10 | 30 | 6 | 1.1 | 0.8 |

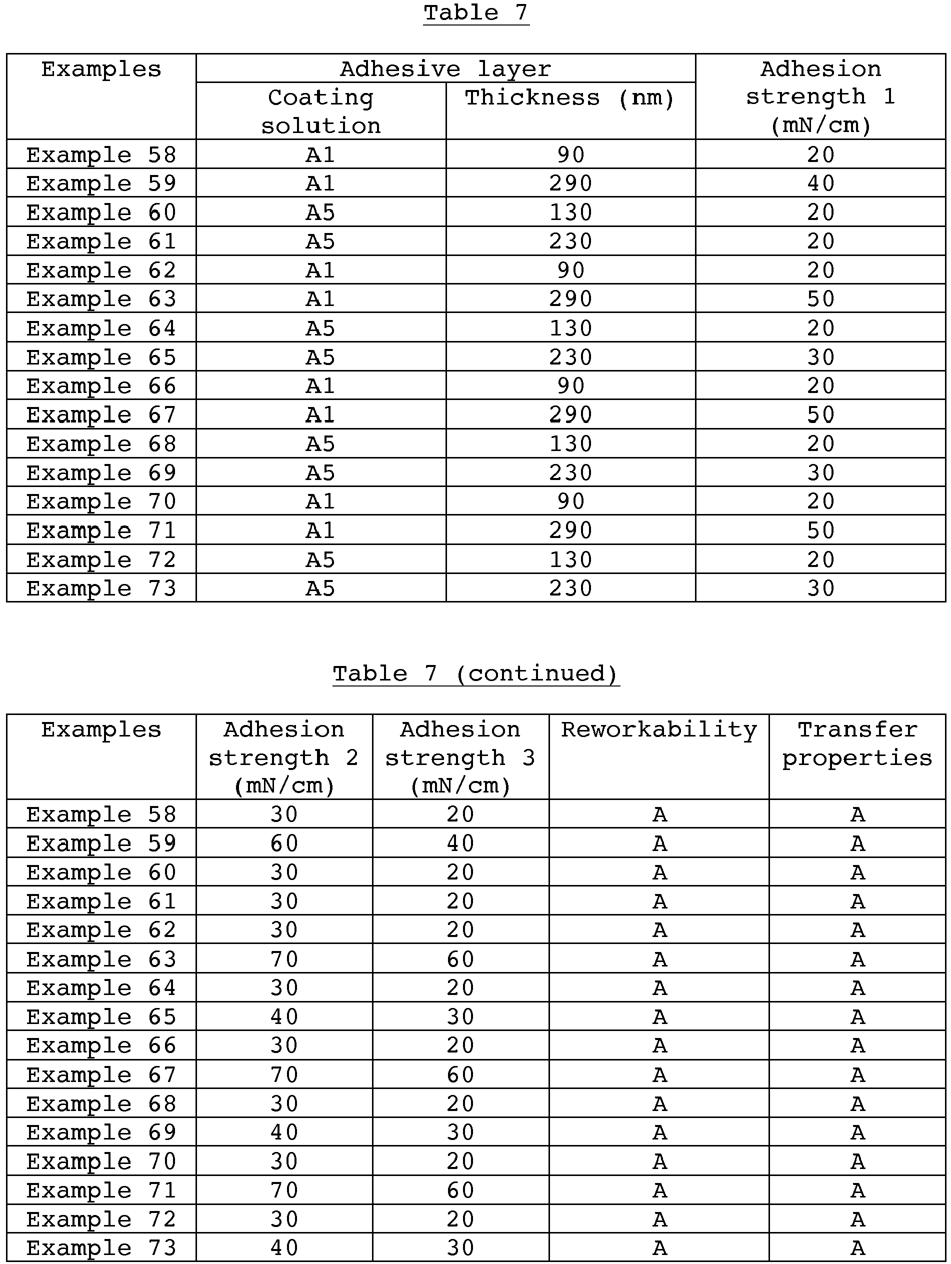

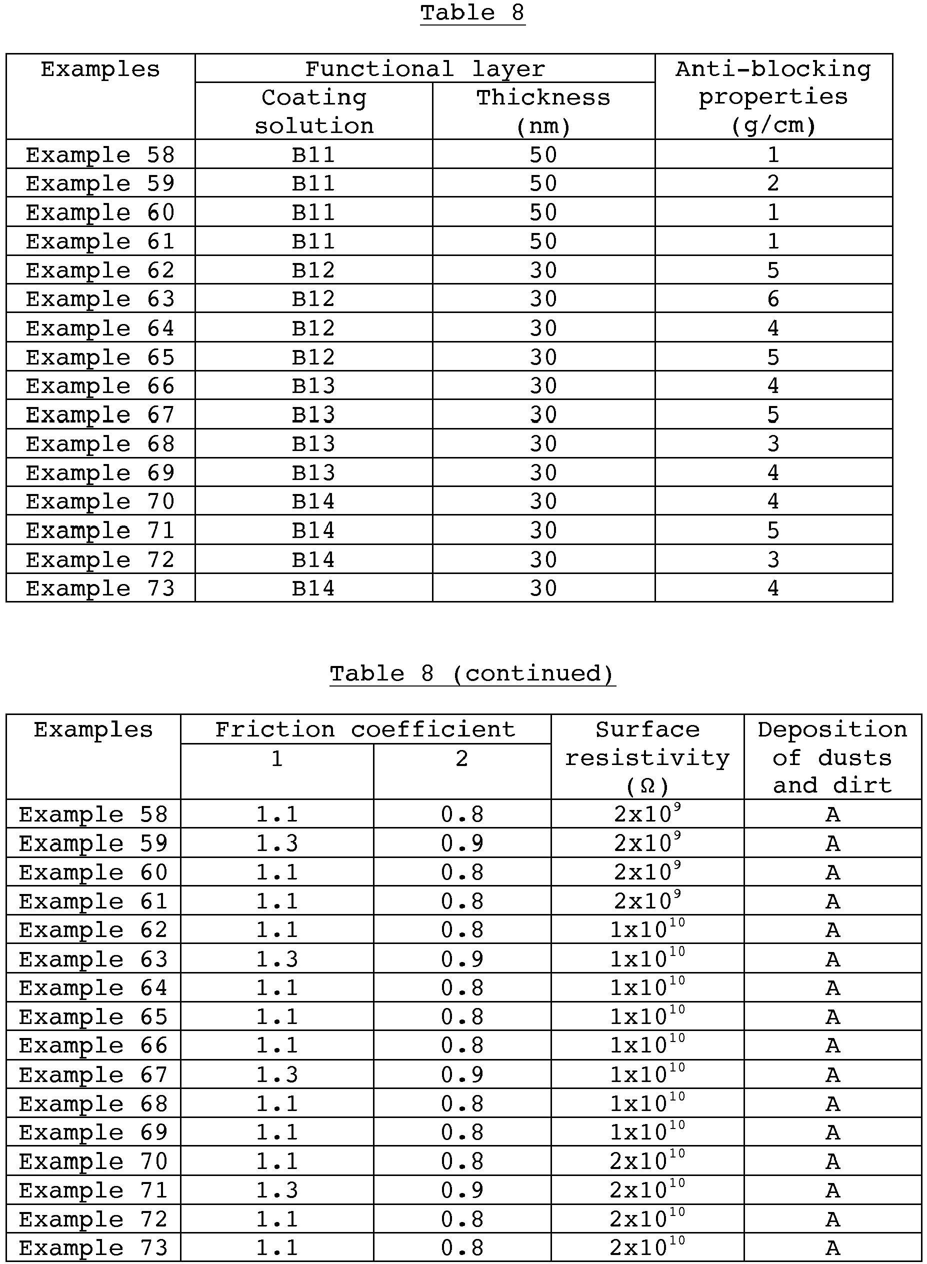

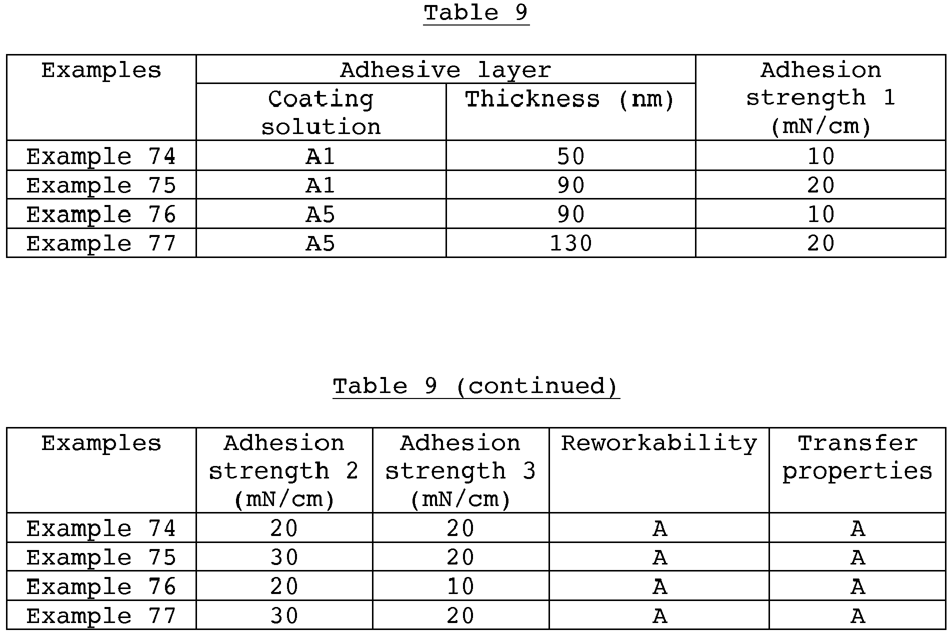

**Table 10**

| Examples | Functional layer | | Anti-blocking properties (g/cm) | Friction coefficient | |
|---|---|---|---|---|---|
| | Coating solution | Thickness (nm) | | 1 | 2 |
| Example 74 | - | - | 8 | 0.5 | 0.4 |
| Example 75 | - | - | 13 | 0.5 | 0.4 |
| Example 76 | - | - | 5 | 0.5 | 0.4 |
| Example 77 | - | - | 10 | 0.5 | 0.4 |

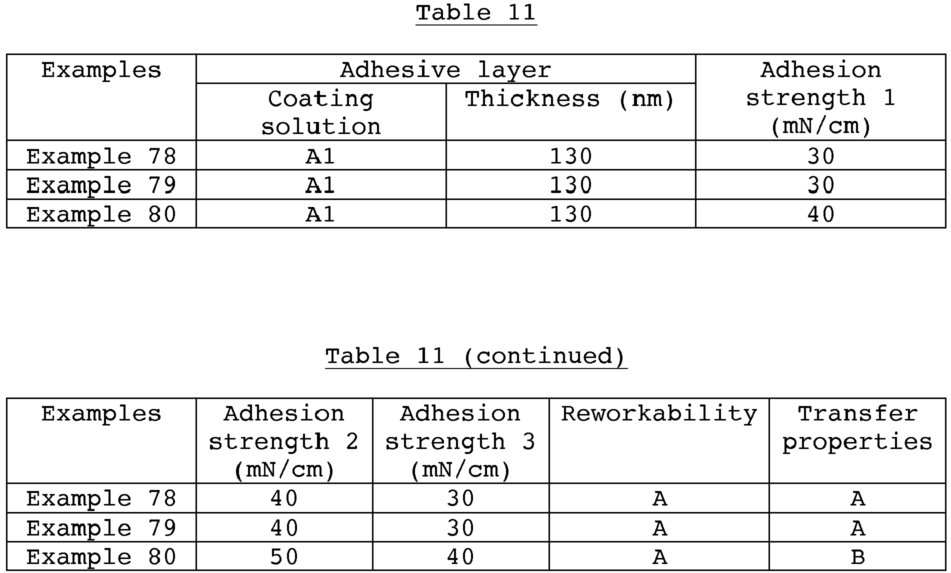

**Table 12**

| Examples | Functional layer | | Anti-blocking properties (g/cm) | Friction coefficient | |
|---|---|---|---|---|---|
| | Coating solution | Thickness (nm) | | 1 | 2 |
| Example 78 | - | - | 140 | 1.5 | 1.1 |
| Example 79 | C4 | 30 | 250 | 1.5 | 1.1 |
| Example 80 | - | - | X | 1.6 | 1.1 |

### Examples 82 to 153:

The same procedure as in Example 1 was conducted except that the coating agent composition was replaced with those shown in Tables 2, 13 and 14, thereby obtaining polyester films. As shown in Tables 15 to 18, the resulting polyester films exhibited good adhesion strength, anti-blocking properties and friction coefficient.

### Examples 154 to 169:

The same procedure as in Example 1 was conducted except that the coating agent composition was replaced with those shown in Tables 2 and 13, thereby obtaining polyester films. As shown in Tables 19 and 20, the resulting polyester films exhibited good adhesion strength, anti-blocking properties, friction coefficient and antistatic performance.

### Examples 170 to 174:

The same procedure as in Example 1 was conducted except that the polyester composition for the surface layer on the side opposed to the adhesive layer was changed to a mixed raw material obtained by mixing the polyesters (A), (B) and (D) in amounts of 72%, 3% and 25%, respectively, and the respective mixed raw materials were co-extruded into a three-kind/three-layer structure (surface layer on adhesive layer side/intermediate layer/surface layer on side opposed to adhesive layer = 3:19:3 as output), and further the coating agent composition was replaced with those shown in Tables 2 and 13, thereby obtaining polyester films. The thus obtained polyester films had Sa of 30 nm on the surface thereof on the side opposed to the adhesive layer, and also exhibited good adhesion strength and friction coefficient. Various properties of these films are shown in Tables 21 and 22 below.

### Example 175:

The same procedure as in Example 170 was conducted except that neither the adhesive layer nor the functional layer was provided, thereby obtaining a polyester film. The thus obtained polyester film having none of the adhesive layer and the functional layer was coated with a coating solution A15 shown in Table 13 below such that the resulting adhesive layer had a thickness of 130 nm (after drying), and then dried at 100°C for 60 s, thereby obtaining a polyester film on which the adhesive layer was formed by an off-line coating method. As shown in Tables 21 and 22, the resulting polyester film was deteriorated in transfer properties and anti-blocking properties, but exhibited good adhesion strength.

### Comparative Example 1:

The same procedure as in Example 1 was conducted except that neither the adhesive layer nor the functional layer was provided, thereby obtaining a polyester film. As a result of evaluating the resulting polyester film, it was confirmed that as shown in Table 23, the film had no adhesion strength.

### Comparative Examples 2 to 7:

The same procedure as in Example 1 was conducted except that the coating agent composition was replaced with those shown in Tables 1, 2 and 13, thereby obtaining polyester films. As shown in Table 23, the resulting polyester films had no adhesion strength.

### Comparative Example 8:

The polyester film having neither an adhesive layer nor a functional layer which was obtained in Comparative Example 1 was coated with a coating solution A1 shown in the above Table 1 such that the resulting adhesive layer had a thickness of 20 *µ*m (after drying), thereby obtaining a polyester film on which the adhesive layer was formed by an off-line coating method. The resulting film was adhered onto a polyester film such that the adhesive layer of the film was contacted with the polyester film, and then cut. As a result, there occurred squeeze-out of the components of the adhesive layer which was never observed in the respective Examples, so that a fear of contamination of an adherend with the adhesive components was caused. The other properties of the resulting film are shown in Tables 23 and 24.

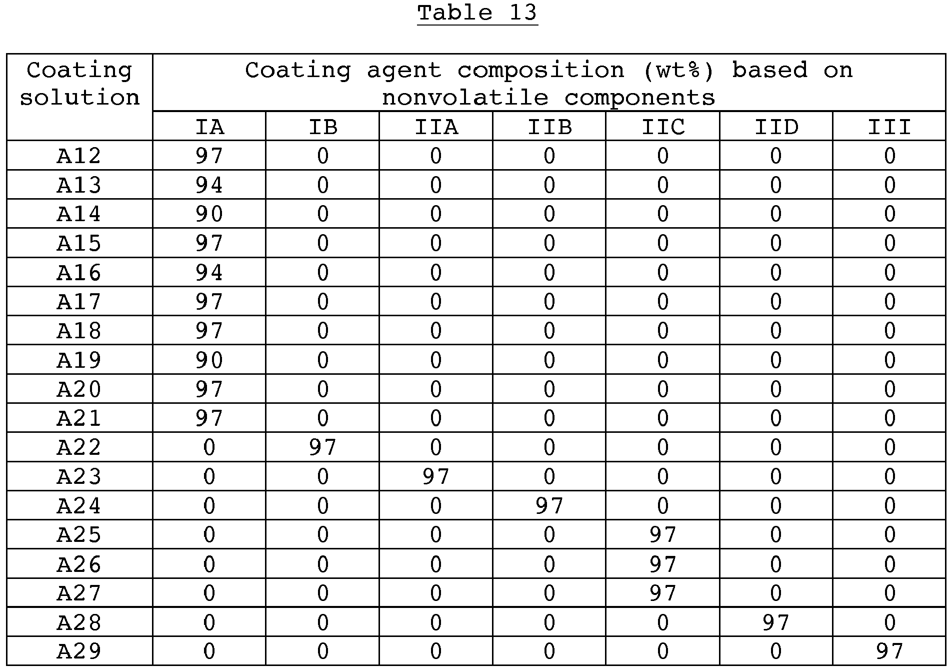

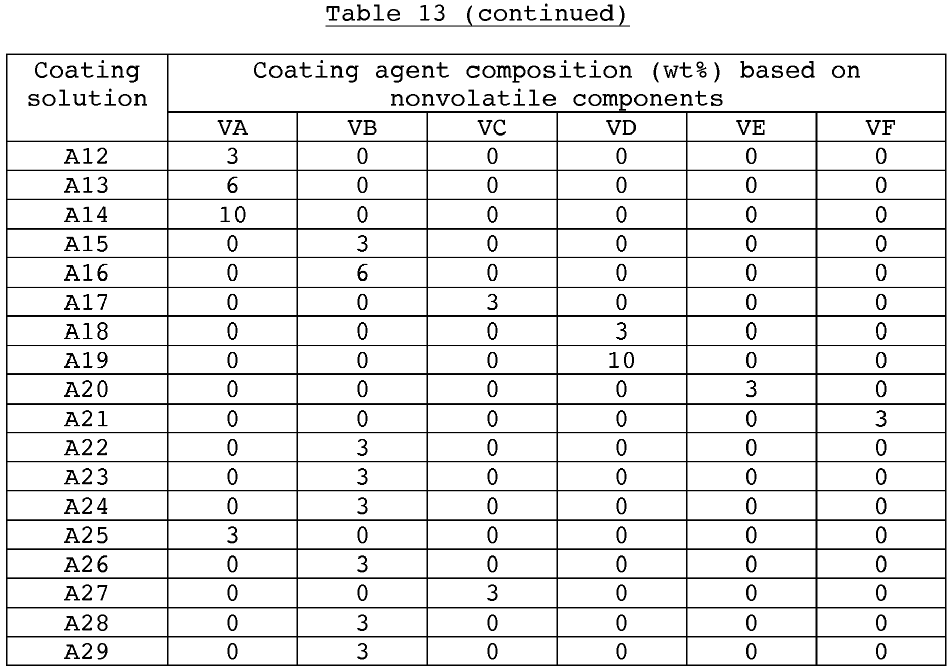

**Table 14**

| Coating solution | Coating agent composition (wt%) based on nonvolatile components | | | | | | |
|---|---|---|---|---|---|---|---|
| | IA | IC | IIE | IVA | IVB | IVC | VB |
| A30 | 87 | 0 | 0 | 10 | 0 | 0 | 3 |
| A31 | 67 | 0 | 0 | 30 | 0 | 0 | 3 |
| A32 | 94 | 0 | 0 | 0 | 3 | 0 | 3 |
| A33 | 94 | 0 | 0 | 0 | 0 | 3 | 3 |

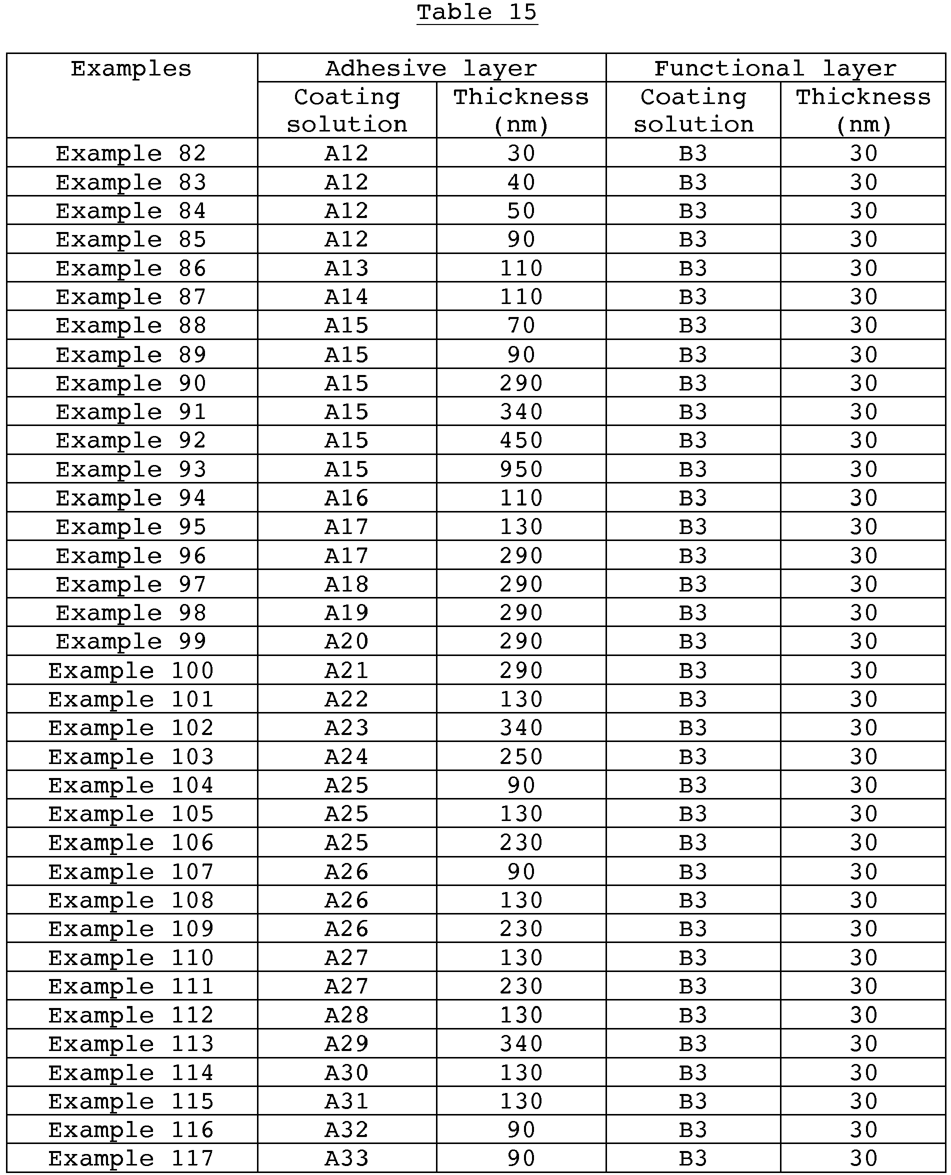

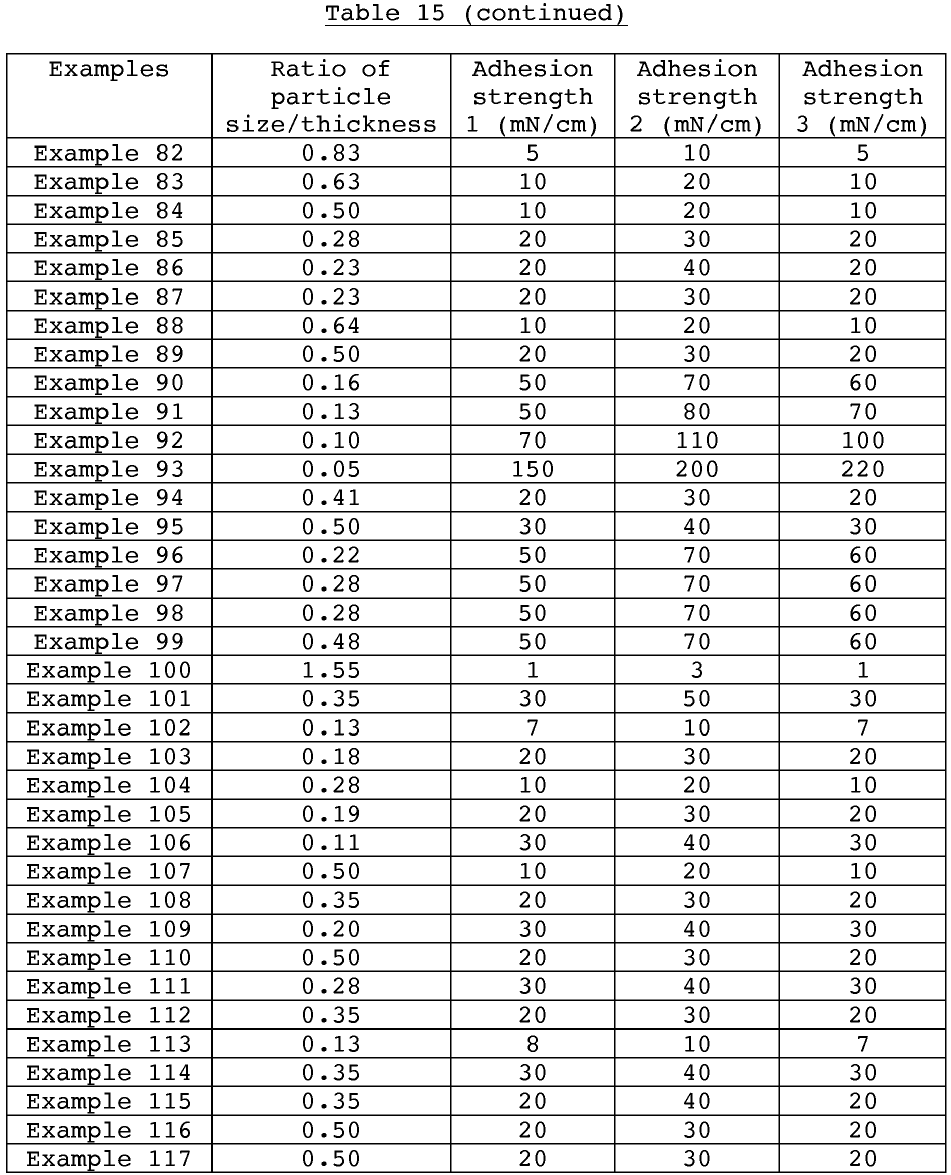

**Table 16**

| Examples | Reworkability | Transfer properties | Anti-blocking properties (g/cm) | Friction coefficient | |
|---|---|---|---|---|---|
| | | | | 1 | 2 |
| Example 82 | A | A | 2 | 0.9 | 0.6 |
| Example 83 | A | A | 2 | 0.9 | 0.6 |
| Example 84 | A | A | 2 | 0.9 | 0.6 |
| Example 85 | A | A | 3 | 0.9 | 0.6 |
| Example 86 | A | A | 3 | 0.9 | 0.6 |
| Example 87 | A | A | 3 | 0.9 | 0.6 |
| Example 88 | A | A | 2 | 0.8 | 0.5 |
| Example 89 | A | A | 3 | 0.8 | 0.5 |
| Example 90 | A | A | 5 | 0.8 | 0.5 |
| Example 91 | A | A | 7 | 0.8 | 0.5 |
| Example 92 | A | A | 9 | 0.8 | 0.5 |
| Example 93 | A | A | 30 | 0.8 | 0.5 |
| Example 94 | A | A | 3 | 0.8 | 0.5 |
| Example 95 | A | A | 4 | 0.6 | 0.5 |
| Example 96 | A | A | 5 | 0.6 | 0.5 |
| Example 97 | A | A | 5 | 0.6 | 0.4 |
| Example 98 | A | A | 5 | 0.6 | 0.4 |
| Example 99 | A | A | 5 | 0.6 | 0.4 |
| Example 100 | A | A | 5 | 0.6 | 0.4 |
| Example 101 | A | A | 4 | 0.8 | 0.5 |
| Example 102 | A | A | 3 | 0.8 | 0.5 |
| Example 103 | A | A | 2 | 0.8 | 0.5 |
| Example 104 | A | A | 3 | 0.9 | 0.6 |
| Example 105 | A | A | 3 | 0.9 | 0.6 |
| Example 106 | A | A | 4 | 0.9 | 0.6 |
| Example 107 | A | A | 3 | 0.8 | 0.5 |
| Example 108 | A | A | 3 | 0.8 | 0.5 |
| Example 109 | A | A | 4 | 0.8 | 0.5 |
| Example 110 | A | A | 3 | 0.6 | 0.5 |
| Example 111 | A | A | 4 | 0.6 | 0.5 |
| Example 112 | A | A | 3 | 0.8 | 0.5 |
| Example 113 | A | A | 4 | 0.8 | 0.5 |
| Example 114 | A | A | 4 | 0.8 | 0.5 |
| Example 115 | A | A | 5 | 0.8 | 0.5 |
| Example 116 | A | A | 4 | 0.8 | 0.5 |
| Example 117 | A | A | 4 | 0.8 | 0.5 |

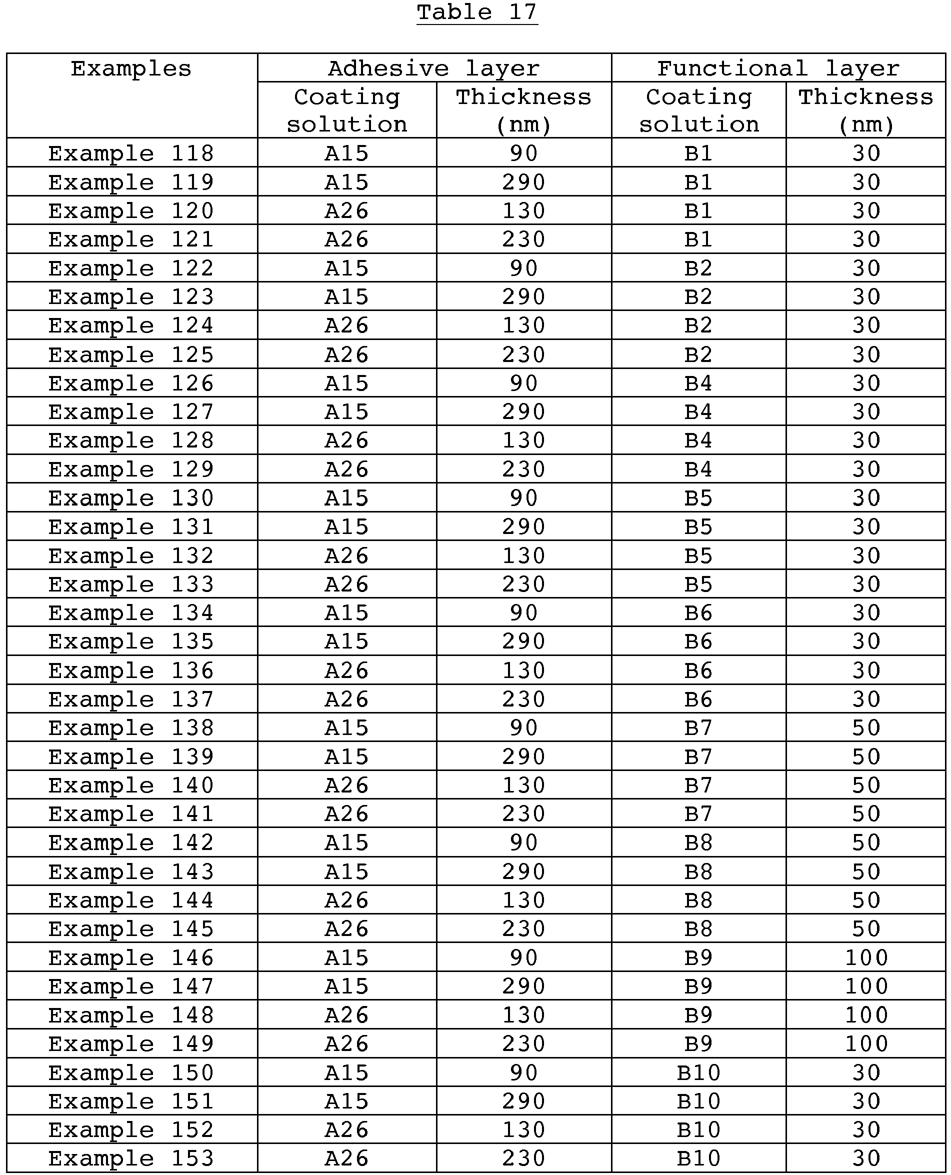

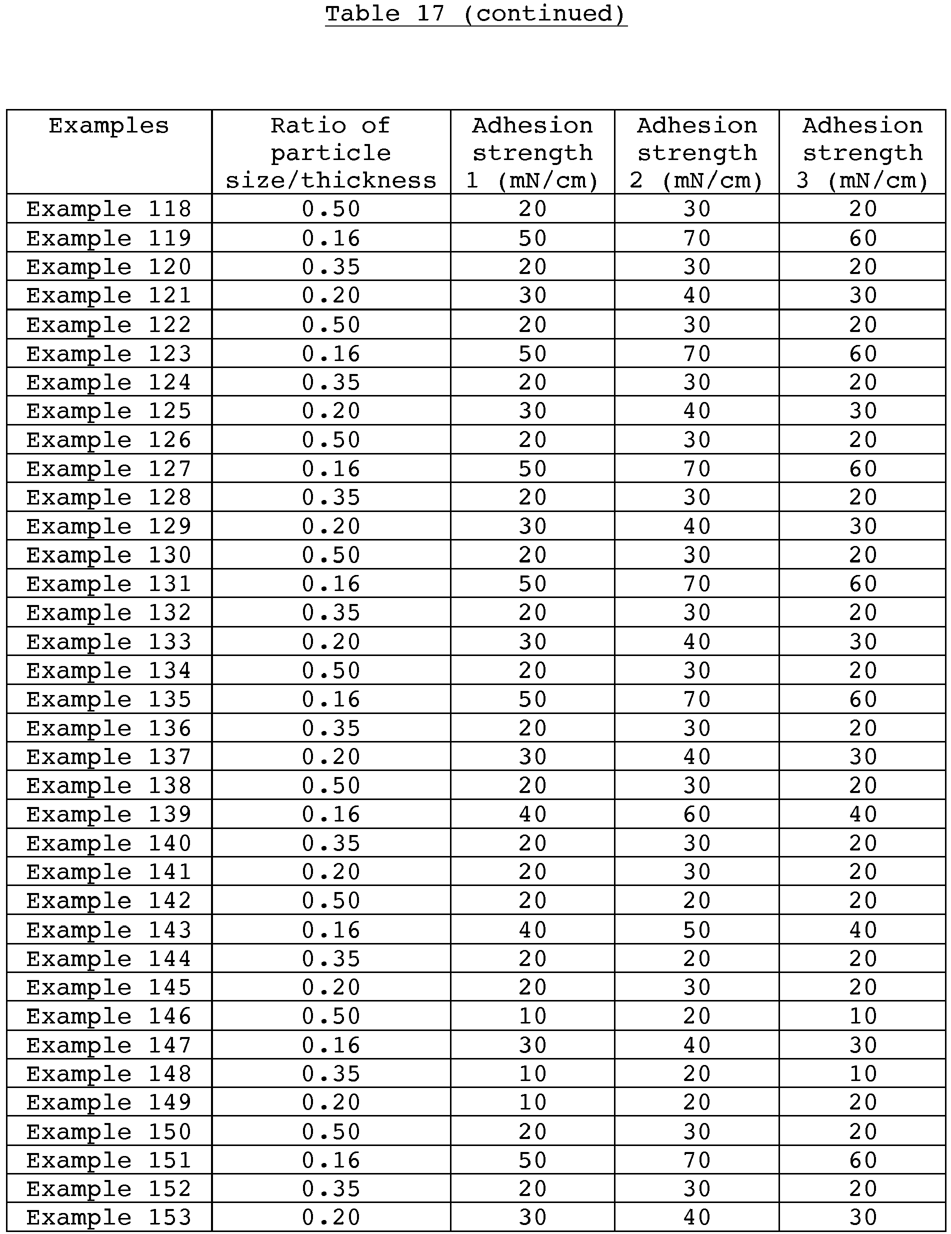

**Table 18**

| Examples | Reworkability | Transfer properties | Anti-blocking properties (g/cm) | Friction coefficient | |
|---|---|---|---|---|---|
| | | | | 1 | 2 |
| Example 118 | A | A | 5 | 0.8 | 0.5 |
| Example 119 | A | A | 8 | 0.8 | 0.5 |
| Example 120 | A | A | 4 | 0.8 | 0.5 |
| Example 121 | A | A | 6 | 0.8 | 0.5 |
| Example 122 | A | A | 5 | 0.8 | 0.5 |
| Example 123 | A | A | 6 | 0.8 | 0.5 |
| Example 124 | A | A | 3 | 0.8 | 0.5 |
| Example 125 | A | A | 5 | 0.8 | 0.5 |
| Example 126 | A | A | 4 | 0.8 | 0.5 |
| Example 127 | A | A | 5 | 0.8 | 0.5 |
| Example 128 | A | A | 3 | 0.8 | 0.5 |
| Example 129 | A | A | 4 | 0.8 | 0.5 |
| Example 130 | A | A | 3 | 0.8 | 0.5 |
| Example 131 | A | A | 4 | 0.8 | 0.5 |
| Example 132 | A | A | 3 | 0.8 | 0.5 |
| Example 133 | A | A | 3 | 0.8 | 0.5 |
| Example 134 | A | A | 4 | 0.8 | 0.5 |
| Example 135 | A | A | 5 | 0.8 | 0.5 |
| Example 136 | A | A | 3 | 0.8 | 0.5 |
| Example 137 | A | A | 4 | 0.8 | 0.5 |
| Example 138 | A | A | 1 | 0.8 | 0.5 |
| Example 139 | A | A | 2 | 0.8 | 0.5 |
| Example 140 | A | A | 1 | 0.8 | 0.5 |
| Example 141 | A | A | 1 | 0.8 | 0.5 |
| Example 142 | A | A | 1 | 0.8 | 0.5 |
| Example 143 | A | A | 2 | 0.8 | 0.5 |
| Example 144 | A | A | 1 | 0.8 | 0.5 |
| Example 145 | A | A | 1 | 0.8 | 0.5 |
| Example 146 | A | A | 1 | 0.8 | 0.5 |
| Example 147 | A | A | 2 | 0.8 | 0.5 |
| Example 148 | A | A | 1 | 0.8 | 0.5 |
| Example 149 | A | A | 1 | 0.8 | 0.5 |
| Example 150 | A | A | 5 | 0.8 | 0.5 |
| Example 151 | A | A | 8 | 0.8 | 0.5 |
| Example 152 | A | A | 4 | 0.8 | 0.5 |
| Example 153 | A | A | 6 | 0.8 | 0.5 |

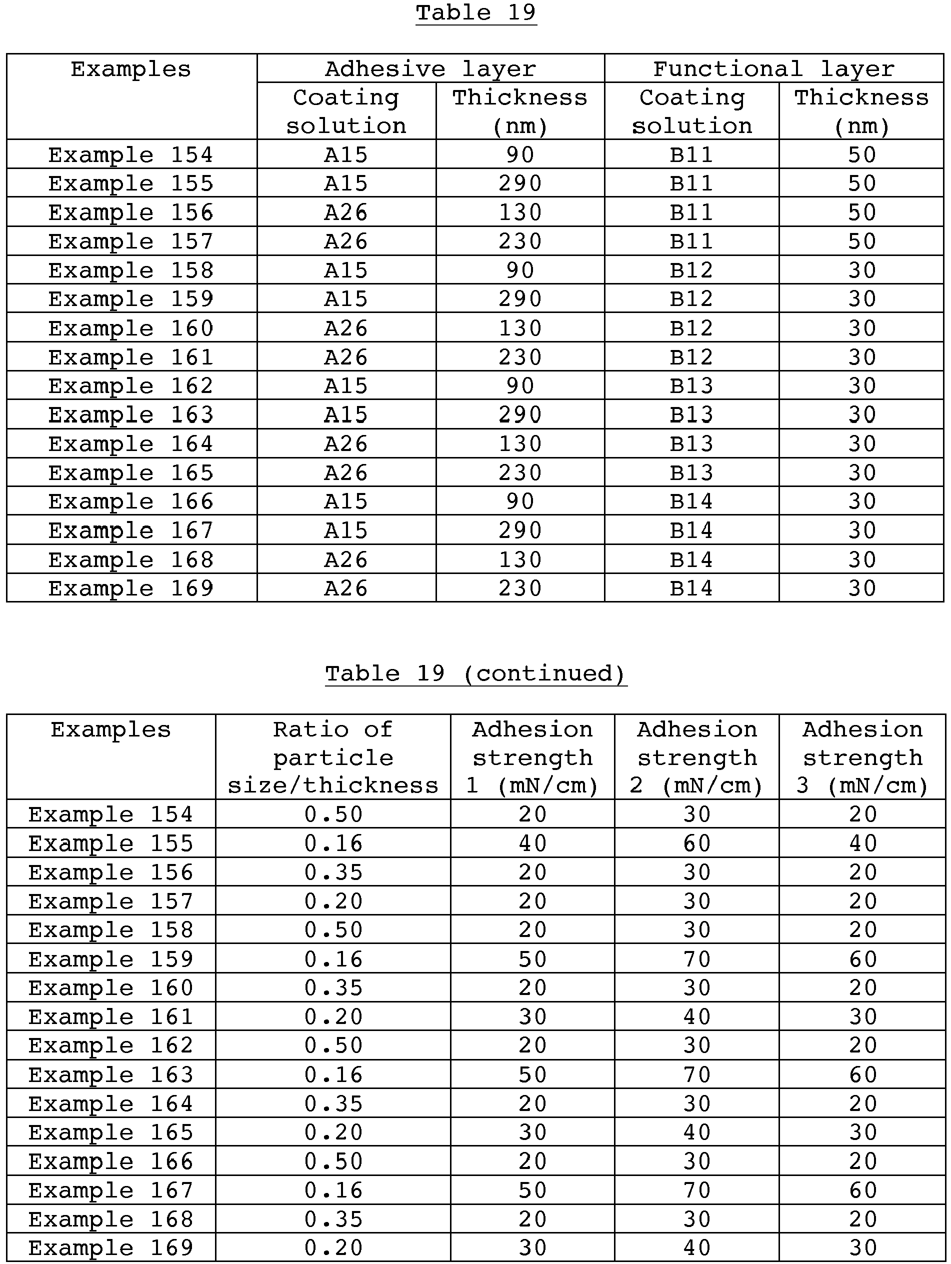

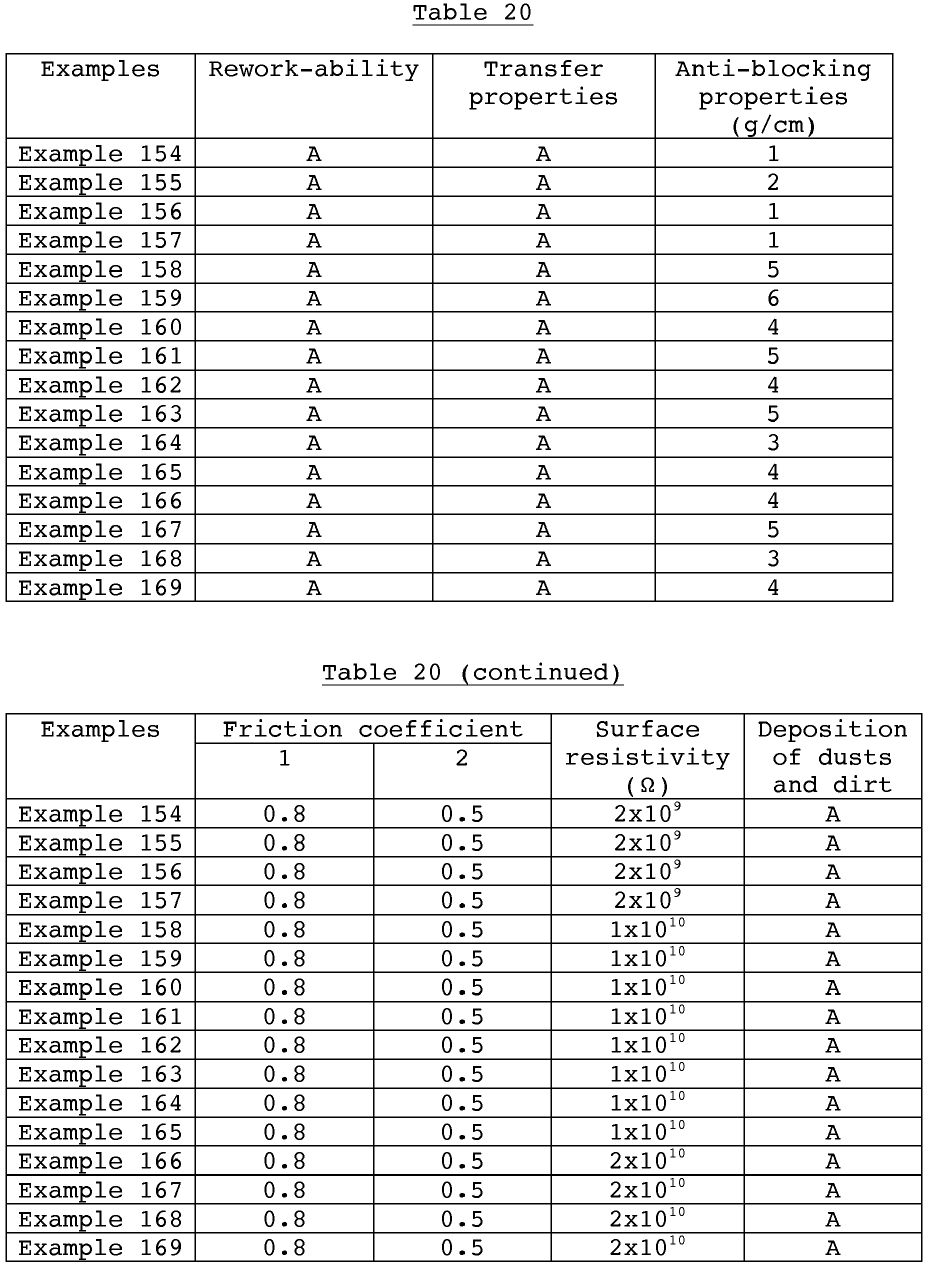

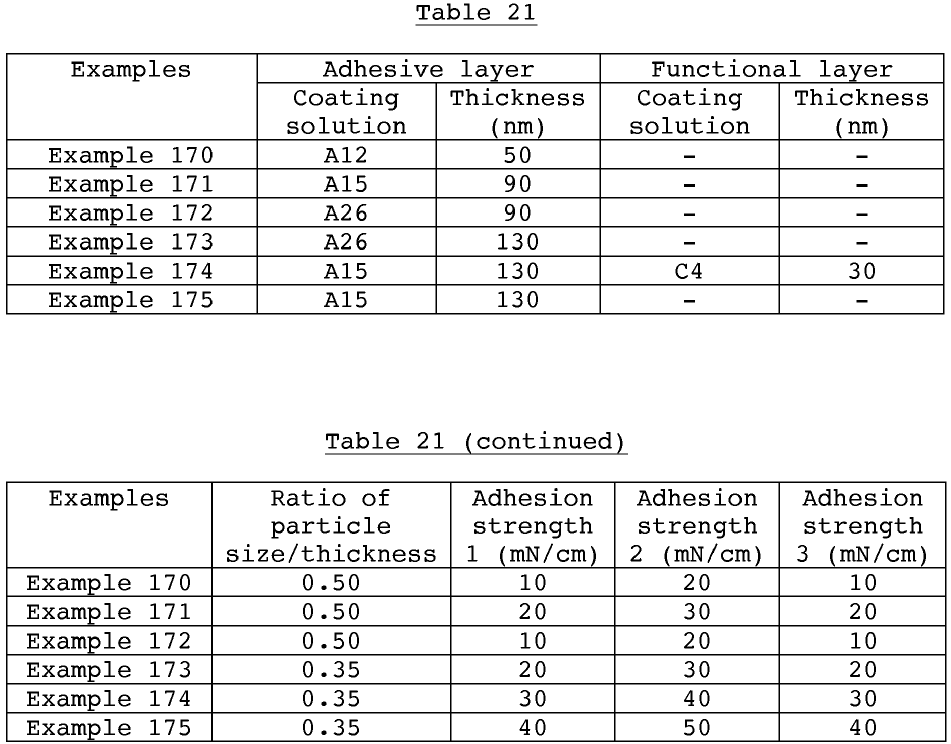

**Table 22**

| Examples | Reworkability | Transfer properties | Anti-blocking properties (g/cm) | Friction coefficient | |
|---|---|---|---|---|---|
| | | | | 1 | 2 |
| Example 170 | A | A | 8 | 0.5 | 0.4 |
| Example 171 | A | A | 13 | 0.5 | 0.4 |
| Example 172 | A | A | 5 | 0.5 | 0.4 |
| Example 173 | A | A | 10 | 0.5 | 0.4 |
| Example 174 | A | A | 150 | 0.5 | 0.4 |
| Example 175 | A | B | X | 0.6 | 0.4 |

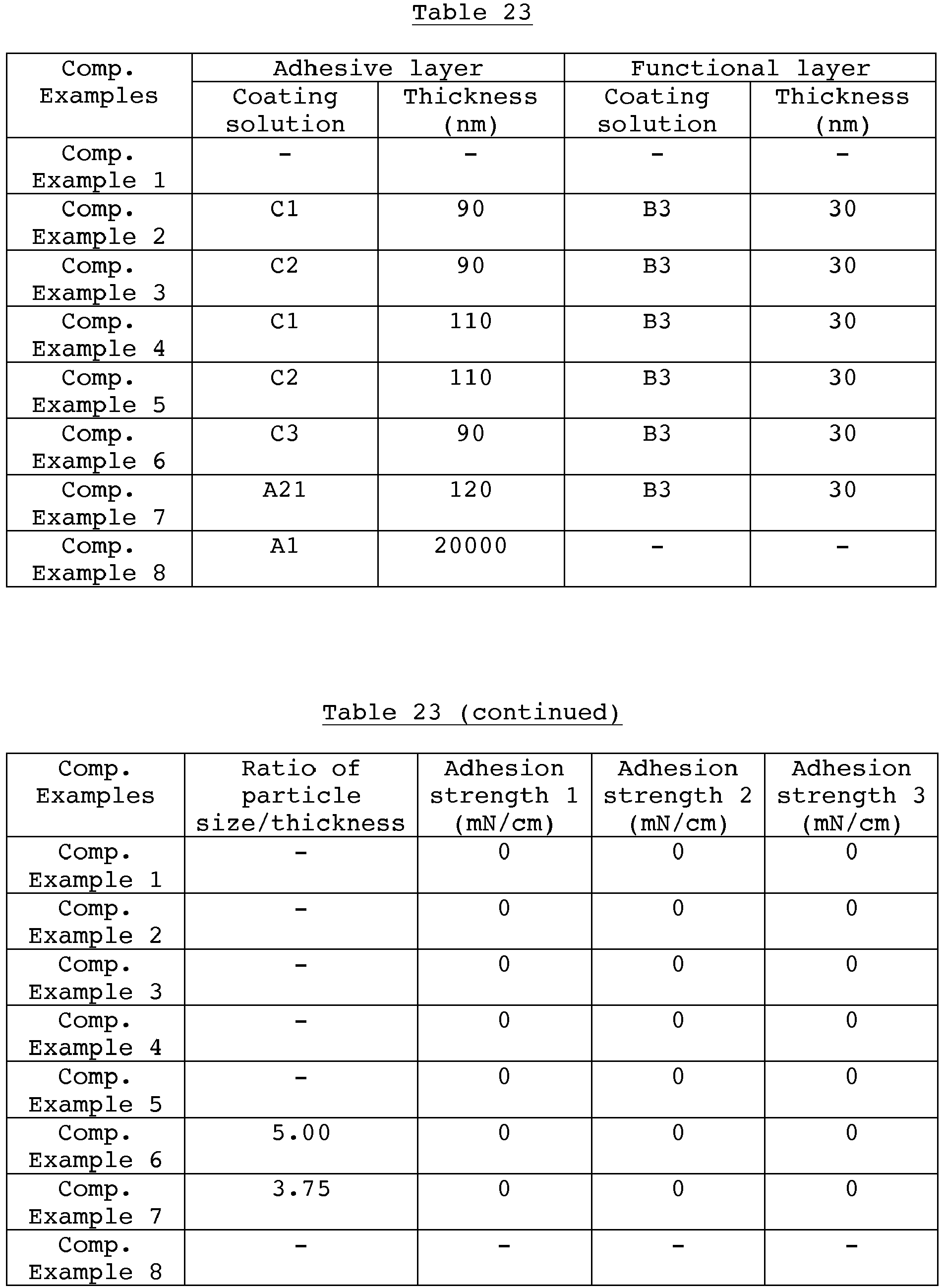

**Table 24**

| Comp. Examples | Reworkability | Transfer properties | Anti-blocking properties (g/cm) | Friction coefficient | |
|---|---|---|---|---|---|
| | | | | 1 | 2 |
| Comp. Example 1 | - | - | - | 1.4 | 1.1 |
| Comp. Example 2 | - | A | 1 | 1.0 | 0.7 |
| Comp. Example 3 | - | A | 1 | 1.0 | 0.7 |
| Comp. Example 4 | - | A | 1 | 1.1 | 0.8 |
| Comp. Example 5 | - | A | 1 | 1.1 | 0.8 |
| Comp. Example 6 | - | A | 3 | 0.5 | 0.4 |
| Comp. Example 7 | - | A | 4 | 0.6 | 0.4 |
| Comp. Example 8 | - | B | X | - | - |

### INDUSTRIAL APPLICABILITY

The adhesive film of the present invention can be suitably used, for example, in the applications such as a surface protective film used for preventing formation of scratches or deposition of contaminants upon transportation, storage or processing of resin plates, metal plates, etc., in which the film is required, in particular, to have less fisheyes, excellent mechanical strength and heat resistance as well as good adhesive properties.

## Claims

1. An adhesive film comprising a non-polyolefin-based film and an adhesive layer formed on at least one surface of the non-polyolefin-based film, the adhesive layer having a thickness of 1 to 3000 nm and an adhesion strength to a polymethyl methacrylate plate of 1 to 1000 mN/cm.

2. The adhesive film according to claim 1, wherein the adhesive layer is formed by coating.

3. The adhesive film according to claim 1, wherein the adhesive layer comprises particles having an average particle diameter of not more than 3 *µ*m which is not more than 3 times the thickness of the adhesive layer.

4. The adhesive film according to claim 1, wherein the non-polyolefin-based film is at least one film selected from the group consisting of a polyester film, a polycarbonate film, a fluororesin film and a polyimide film.

5. The adhesive film according to claim 1, wherein the adhesive layer comprises a resin having a glass transition point of not higher than 0°C.

6. The adhesive film according to claim 5, wherein the resin having a glass transition point of not higher than 0°C is at least one resin selected from the group consisting of a polyester resin, an acrylic resin and a urethane resin.
